# EUROPEAN PATENT SPECIFICATION

(11) **EP 2 476 647 B1**
(45) Date of publication and mention of the grant of the patent: **05.07.2023**
(21) Application number: 10815381.8
(22) Date of filing: 08.09.2010
(51) Int. Cl.: C01B 25/45, C01B 25/37, H01M 4/58, H01M 10/052

(54) **PROCESS FOR PRODUCTION OF OLIVINE-TYPE LITHIUM IRON PHOSPHATE PARTICLE POWDER**
VERFAHREN ZUR HERSTELLUNG VON OLIVIN-TYP LITHIUMEISENPHOSPHAT-PARTIKELPULVER
PROCÉDÉ DE PRODUCTION DE POUDRE DE PARTICULES DE PHOSPHATE DE FER LITHIÉ DE TYPE OLIVINE

(30) Priority: 09.09.2009 JP 2009208404; 31.05.2010 JP 2010125084
(43) Date of publication of application: 18.07.2012
(73) Proprietor: Toda Kogyo Corp., Hiroshima 732-0828 (JP)
(72) Inventor: HONDA, Shingo, Otake-shi Hiroshima 739-0652 (JP); NISHIO, Takahisa, Otake-shi Hiroshima 739-0652 (JP); MISHIMA, Yuji, Otake-shi Hiroshima 739-0652 (JP); YAMAMOTO, Hiroshi, Otake-shi Hiroshima 739-0652 (JP)
(74) Representative: J A Kemp LLP
(86) International application number: PCT/JP2010/065404
(87) International publication number: WO 2011/030786

(56) References cited:
- DE-A1-102007 049 757
- DE-A1-102009 001 204
- JP-A- 2004 509 447
- JP-A- 2009 266 813
- US-A- 6 140 001
- US-A1- 2003 027 049
- US-A1- 2007 134 554
- REALE P ET AL: "Synthesis and Thermal Behavior of Hydrated Iron(III) Phosphates of Interest as Positive Electrodes in Li Battieries", CHEMISTRY OF MATERIALS, AMERICAN CHEMICAL SOCIETY, US, vol. 15, no. 26, 4 December 2003 (2003-12-04), pages 5051-5058, XP002523335, ISSN: 0897-4756, DOI: 10.1021/CM031107Z
- YANNING SONG ET AL: "New Iron(III) Phosphate Phases: Crystal Structure and Electrochemical and Magnetic Properties", INORGANIC CHEMISTRY, AMERICAN CHEMICAL SOCIETY, EASTON, US, vol. 41, no. 22, 4 November 2002 (2002-11-04), pages 5778-5786, XP008152430, ISSN: 0020-1669, DOI: 10.1021/IC025688Q [retrieved on 2002-10-11]
- REALE, P. ET AL.: 'Synthesis and Thermal Behavior of Crystalline Hydrated Iron(III) Phosphates of Interest as Positive Electrodes' LI BATTERIES, CHEM. MATER. vol. 15, no. 26, 2003, pages 5051 - 5058, XP002523335
- SONG, Y. ET AL.: 'New Iron(III) Phosphate Phases: Crystal Structure and Electrochemical and Magnetic Properties' INORG. CHEM. vol. 41, no. 22, 2002, pages 5778 - 5786, XP008152430

## Description

### TECHNICAL FIELD

Provided herewith is a process which comprises producing crystalline ferric phosphate hydrate particles and where these are further used in producing the olivine type lithium iron phosphate particles for an positive electrode (cathode) of non-aqueous electrolyte secondary batteries by using the precursor.

### BACKGROUND ART

In recent years, in consideration of global environments, electric cars and hybrid cars have been recently developed and put into practice, so that there have been noticed lithium ion secondary batteries having a small size, a light weight and a high energy density. However, in the lithium ion secondary batteries, a compound comprising a scarce metal such as Co and Ni has been frequently used as a positive electrode material of the secondary batteries. In order to more widely spread the lithium ion secondary batteries, it is required to solve large problems concerning costs and stable supply. Further, there have been reported fire and explosion accidents of lithium ion secondary batteries owing to the positive electrode material, so that the problems concerning safety have also been pointed out. From these backgrounds, it has been expected to develop a positive electrode material for lithium ion secondary batteries which comprises no scarce metals and therefore is safe.

Under these circumstances, as positive electrode active substances for 3.5 V-grade lithium ion secondary batteries, there has been noticed an olivine type lithium iron phosphate. The olivine type lithium iron phosphate has a crystal structure in which P atoms and O atoms are strongly connected to each other by a covalent bond therebetween, and therefore provides such a positive electrode material which has an extremely stable crystal structure and an extremely low risk of firing, explosion, etc. In addition, since the transition metal atom contained in the olivine type lithium iron phosphate which contributes to oxidation-reduction reaction is not Co or Ni but Fe, the olivine type lithium iron phosphate is expected to provide a material capable of realizing large improvements in costs and stable supply.

Since in 1997, it has been reported by Pahdi et al., that lithium iron phosphate exhibits an oxidation-reduction potential of 3.4 V with respect to Li⁺/Li, a number of research results have been reported. Regarding the method for production of the lithium iron phosphate, the solid phase method (WO 2005-041327), the hydrothermal method (Japanese Patent Application Laid-Open (TOKUHYO) No. 2007-511458), the supercritical method (Japanese Patent Application Laid-Open (KOKAI) No. 2004-095386), the normal pressure wet method (WO 2007-000251) or the like have been reported until now.

Patent Document 6 describes iron (III) orthophosphate of general formula FePo₄ x nH₂O (n ≤ 2.5) which is prepared by a process in which iron (II), iron (III) or mixed iron (II, III) compounds are reacted with phosphoric acid having a concentration in the range of 5% to 50% where iron (II) optionally present after the reaction is converted to iron (III) by addition of an oxidizing agent and solid iron (III) orthosphosphate is separated from the reaction mixture.

Patent Document 7 concerns a method of synthesis for a material made of particles having a core and a coating and/or being connected to each other by carbon crosslinking, the core of the particles containing at least one compound of the formula LiₓM_{1-y}M'_{y}(XO₄)ₙ in which 0 ≤ x ≤ 2, 0 ≤ y ≤ 0.06 and 1 ≤ n ≤ 1.5, M is a transition metal, M' is an element with fixed valency, and the synthesis is carried out by reaction and bringing into equilibrium a mixture of precursors with a reducing gaseous atmosphere in such a way as to bring the transition metal or metals to the desired valency level, the synthesis being carried out in the presence of a source of carbon, which is subjected to pyrolysis.

Among these various methods, the solid phase method is a method capable of synthesizing the olivine type lithium iron phosphate in a relatively simple manner. The conventionally known solid phase methods are classified into one method using a divalent iron compound as an iron raw material and another method using a trivalent iron compound as an iron raw material.

In Patent Document 1, there is described the method in which iron oxalate is used as a divalent iron compound raw material. When using iron oxalate as the raw material, there tends to arise such a problem concerning costs that the iron oxalate is too expensive as the Fe raw material for the olivine type lithium iron phosphate because it aims at providing an inexpensive positive electrode material.

In Patent Document 2, there is described the method in which ferric phosphate octahydrate (Fe₃(PO₄)₂·8H₂O) is used as a divalent iron compound raw material. In Patent Document 2, it is described that the invention relates to ferric phosphate octahydrate which is in the form of fine particles and has a less Na content. Irrespective of the descriptions in Patent Document 2, it has been reported that the ferric phosphate octahydrate comprises Na ions in an amount of not less than 0.1% and not more than 1%. When using the ferric phosphate octahydrate as a raw material of a solid phase reaction, the obtained product is merely olivine type lithium iron phosphate particles comprising Na in a large amount. Since Na acts only for lowering battery characteristics, there is a further demand for a positive electrode material for lithium ion secondary batteries which comprises a still reduced amount of Na.

In Patent Document 3, Patent Document 4 and Patent Document 5, there are described the processes for producing olivine type lithium iron phosphate particles in which ferric phosphate dihydrate is used as a trivalent iron compound raw material. In the production processes, Fe and P are uniformly present at an atomic level in the raw material. Therefore, as long as only a molar ratio P/Fe in the ferric phosphate dihydrate is adequately controlled, there is no risk that any deviation of the compositional ratio occurs. Therefore, it is considered that these processes are an industrially suitable method for production of the olivine type lithium iron phosphate particles.

However, there has been still established no method for production of the ferric phosphate hydrate as a main raw material of the olivine type lithium iron phosphate particles. In addition, although the amount of impurities in the ferric phosphate hydrate is an important factor which has a significant influence on an amount of impurities in the olivine type lithium iron phosphate particles, no method of reducing the amount of impurities in the ferric phosphate hydrate is known until now.

As a result of subjecting ferric phosphate dihydrate particles commercially available from Aldrich Inc., to powder X-ray diffraction analysis and ICP analysis, it has been confirmed that the ferric phosphate dihydrate particles has an amorphous phase, and Na in an amount of more than 10000 ppm is detected.

In Non-Patent Document 1, it is described that a hydrothermal reaction is conducted under high-temperature and high-pressure conditions to synthesize a ferric phosphate dihydrate having a strengite crystal structure. Since the reaction is carried out under high-temperature and high-pressure conditions, the resulting ferric phosphate dihydrate particles are large crystalline particles comprising primary particles having a particle diameter of from a micron-order to a sub-millimeter-order.

The olivine type lithium iron phosphate particles synthesized from the crystalline ferric phosphate hydrate particles comprising primary particles having a large particle diameter are particles whose primary particles have a particle diameter of a micron-order. Therefore, the ferric phosphate hydrate particles described in Non-Patent Document 1 are unsuitable as a raw material for synthesis of fine olivine type lithium iron phosphate particles having a particle diameter of a submicron-order.

Also, in Non-Patent Document 2, there is described the method in which ferric phosphate dihydrate is synthesized by a wet reaction under normal pressures. However, in the method of Non-Patent Document 2, there is described neither a content of impurities nor a method of reducing the content of impurities. Further, in this method, since the reaction concentration is extremely low, i.e., not more than 0.01 M, it would be impossible to industrially produce the ferric phosphate hydrate with low costs in an industrially suitable manner.

In addition, when applying the bulky olivine type lithium iron phosphate particles on an electrode, the resulting coating layer tends to be hardly increased in an electrode density thereof, which tends to be disadvantageous from the viewpoint of a volume energy density. In consequence, the olivine type lithium iron phosphate particles for a positive electrode of non-aqueous electrolyte lithium ion secondary batteries are preferably aggregated particles formed by aggregating fine primary particles.

### PRIOR ART DOCUMENTS

### PATENT DOCUMENTS

Patent Document 1: Japanese Patent Application Laid-open (KOKAI) No. 2006-032241
Patent Document 2: Japanese Patent Application Laid-open (KOKAI) No. 2003-292307
Patent Document 3: PCT Pamphlet WO 01/53198
Patent Document 4: Japanese Patent Application Laid-open (TOKUHYO) No. 2004-509447
Patent Document 5: Japanese Patent Application Laid-open (TOKUHYO) No. 2004-509058
Patent Document 6: DE 10 2007 049757 A1
Patent Document 7: US 2007/134554 A1

### NON-PATENT DOCUMENTS

Non-Patent Document 1: Yanning Song, et al., "Inorganic Chemistry", American Chemical Society, 2002, Vol. 41, No. 22, pp. 5778-5786
Non-Patent Document 2: Charles Delacourt, et al., "Chemistry of Materials", American Chemical Society, 2003, Vol. 15, No. 26, pp. 5051-5058

### SUMMARY OF THE INVENTION

### PROBLEM TO BE SOLVED BY THE INVENTION

Therefore, an object or technical task of the present invention is to establish a process which comprises producing ferric phosphate hydrate particles which are suitable as a precursor of olivine type lithium iron phosphate particles for a positive electrode active substance of non-aqueous electrolyte secondary batteries, and are in the form of fine particles and have a very small content of impurities, and wherein said process further comprises using the ferric phosphate hydrate particles in producing olivine type lithium iron phosphate particles which are in the form of fine particles and a very small content of impurities.

### MEANS FOR SOLVING THE PROBLEM

The above objects or technical tasks of the present invention can be achieved by the following aspects of the present invention.

That is, in accordance with the present invention, there is provided a process which comprises the step of reacting iron oxide particles or iron oxide hydroxide particles having a BET specific surface area of not less than 50 m²/g, with a phosphorus compound in a solution thereof in a temperature range of 60 to 100°C, wherein a reaction concentration in the solution is in the range of 0.1 to 3.0 mol/L based on a concentration of iron therein, an amount of the phosphorus compound added as a raw material charged is 100 to 1000% in terms of mol% of phosphorus ions based on iron ions, and a pH value of the reaction solution is not more than 3, to produce ferric phosphate hydrate particles which have a sodium (Na) content of not more than 100 ppm, and a molar ratio of phosphorus to iron (phosphorus/iron) of 0.9 to 1.1,
mixing the ferric phosphate hydrate particles with a lithium compound and an organic compound; and
subjecting the resulting mixture to a heat treatment in an inert atmosphere or a reducing atmosphere at a temperature of 300 to 800°C,
to produce olivine type lithium iron phosphate particles.

Further, according to the present invention, it is preferred that the olivine type lithium iron phosphate particles have a sodium (Na) content of not more than 10 ppm.

Further, according to the present invention, it is preferred that the olivine type lithium iron phosphate particles have a tap density of 0.7 to 1.5 g/cc.

Also provided is a process according to the invention which further comprises taking the olivine type lithium iron phosphate particles and adding to them a conducting agent and a binder to produce a positive electrode.

Preferably, the conducting agent is selected from acetylene black, carbon black and graphite.

It is further preferred that the binder is selected from polytetrafluoroethylene and polyvinylidene fluoride.

Also provided is a process which further comprises taking the aforementioned positive electrode together with a negative electrode and an electrolyte and producing a secondary battery.

Preferably, the negative electrode is selected from metallic lithium, lithium/aluminum alloy, lithium/tin alloy and graphite or black lead.

It is further preferred that the electrolyte solution includes a solvent which is a combination of ethylene carbonate and diethyl carbonate or is an organic solvent comprising at least one compound selected from the group consisting of propylene carbonate, dimethyl carbonate and dimethoxy ethane.

It is additionally preferred that the electrolyte solution contains dissolved in it lithium phosphate hexafluoride, lithium perchlorate or lithium borate tetrafluoride.

### EFFECT OF THE INVENTION

In the process according to the present invention, it is possible to produce the ferric phosphate hydrate particles at low costs without need of a high-pressure container such as an autoclave. In addition, the ferric phosphate hydrate particles obtained in the process according to the present invention are high-purity crystalline ferric phosphate hydrate particles which are in the form of fine particles and have a very small content of impurities and a uniform P/Fe ratio with a less deviation. When using the particles as a precursor, it is possible to produce olivine type lithium iron phosphate particles which are in the form of fine particles and have a very small content of impurities in a simple and convenient manner.

Further, the ferric phosphate hydrate particles obtained in the process according to the present invention are in the form of aggregated particles of ferric phosphate hydrate particles formed by aggregating fine primary particles together and therefore are high-purity crystalline ferric phosphate hydrate particles having a high tap density. When using such particles as a precursor, it is possible to produce olivine type lithium iron phosphate particles which are formed by aggregating fine primary particles together, at low costs in a simple and convenient manner.

The olivine type lithium iron phosphate particles produced according to the process of the present invention which are produced using the above precursor are in the form of fine particles and have a very small content of impurities, and are suitable as a positive electrode active substance of non-aqueous electrolyte secondary batteries because a secondary battery obtained using the olivine type lithium iron phosphate particles exhibits a high discharge capacity.

### BRIEF DESCRIPTION OF THE DRAWINGS

FIG. 1 is an electron micrograph (SEM) showing ferric phosphate hydrate particles obtained in Example 1-1.
FIG. 2 is a powder X-ray diffraction pattern of the ferric phosphate hydrate particles obtained in Example 1-1.
FIG. 3 is an electron micrograph (SEM) showing lithium iron phosphate particles obtained in Example 2-1.
FIG. 4 is an electron micrograph (SEM) showing ferric phosphate hydrate particles obtained in Example 1-4.
FIG. 5 is an electron micrograph (SEM) showing ferric phosphate hydrate particles obtained in Comparative Example 1-1.
FIG. 6 is an electron micrograph (SEM) showing ferric phosphate hydrate particles obtained in Comparative Example 1-2.
FIG. 7 is an electron micrograph (SEM) showing amorphous ferric phosphate dihydrate particles produced by Aldrich Inc., which were used in Comparative Example 1-3.
FIG. 8 is an electron micrograph (SEM) showing ferric phosphate hydrate particles obtained in Example 1-5.
FIG. 9 is a powder X-ray diffraction pattern of the ferric phosphate hydrate particles obtained in Example 1-5.
FIG. 10 is an electron micrograph (SEM) showing lithium iron phosphate particles obtained in Example 2-5.
FIG. 11 is a powder X-ray diffraction pattern of the lithium iron phosphate particles obtained in Example 2-5.
FIG. 12 is an electron micrograph (SEM) showing ferric phosphate hydrate particles obtained in Example 1-6.
FIG. 13 is a powder X-ray diffraction pattern of the ferric phosphate hydrate particles obtained in Example 1-6.
FIG. 14 is an electron micrograph (SEM) showing lithium iron phosphate particles obtained in Example 2-6.
FIG. 15 is an electron micrograph (SEM) showing ferric phosphate hydrate particles obtained in Example 1-7.
FIG. 16 is an electron micrograph (SEM) showing lithium iron phosphate particles obtained in Example 2-7.

### PREFERRED EMBODIMENTS FOR CARRYING OUT THE INVENTION

The constructions of the present invention are described in detail below.

First, the ferric phosphate hydrate particles produced in the process according to the process of the present invention are described.

The ferric phosphate hydrate particles produced in the process of the present invention have a composition represented by the formula: FePO₄·nH₂O (0 < n • 2) wherein n represents an amount of water of hydration, and among these hydrates, a dihydrate is most stable. However, the amount of water of hydration may vary depending upon a drying temperature. Therefore, the amount of water of hydration is not essential when using the ferric phosphate hydrate particles as a precursor of the olivine type lithium iron phosphate particles.

Also, the ferric phosphate hydrate particles produced in the process of the present invention have a molar ratio P/Fe of 0.9 to 1.1. The deviation of the molar ratio P/Fe of the ferric phosphate hydrate particles tends to be directly reflected on deviation of a molar ratio P/Fe of the olivine type lithium iron phosphate particles. Therefore, it is required that the molar ratio P/Fe of the ferric phosphate hydrate particles is adjusted to the value near 1.0 as a theoretical composition thereof. The molar ratio P/Fe of the ferric phosphate hydrate particles is more preferably 0.95 to 1.05.

Also, the ferric phosphate hydrate particles produced in the process of the present invention exhibit at least one crystal structure selected from the group consisting of a strengite crystal structure (JCPDS Card No. 33-0667) and a meta-strengite (phosphosiderite) crystal structure (JCPDS Card No. 33-0666). These crystal structures have a molar ratio P/Fe of 1.0 as a theoretical value.

Also, the ferric phosphate hydrate particles produced in the process of the present invention preferably have a BET specific surface area of 10 to 50 m²/g. It may be difficult to produce particles having a BET specific surface area of more than 50 m²/g. The particles having a BET specific surface area of less than 10 m²/g are too large to serve as a precursor of the olivine type lithium iron phosphate particles. The BET specific surface area of the ferric phosphate hydrate particles is preferably as large as possible within the above range, and more preferably 10 to 40 m²/g.

The ferric phosphate hydrate particles produced in the process of the present invention have an average primary particle diameter of 50 to 1000 nm. The particles having an average primary particle diameter of more than 1000 nm are too large to serve as a precursor of the olivine type lithium iron phosphate particles. It may be difficult to produce particles having an average primary particle diameter of less than 50 nm. The average primary particle diameter of the ferric phosphate hydrate particles is more preferably 150 to 500 nm.

The ferric phosphate hydrate particles produced in the process of the present invention preferably have an average secondary particle diameter of 3 to 20 µm. When using the ferric phosphate hydrate particles having an average secondary particle diameter of less than 3 µm as the precursor, it may be difficult to produce the olivine type lithium iron phosphate particles having a high tap density. On the other hand, when using the ferric phosphate hydrate particles having an average secondary particle diameter of more than 20 µm as the precursor, the olivine type lithium iron phosphate particles produced from such particles tend to become too large.

The ferric phosphate hydrate particles produced in the process of the present invention preferably have a tap density of 0.4 to 1.5 g/cc. When the tap density of the ferric phosphate hydrate particles is less than 0.4 g/cc, the resulting olivine type lithium iron phosphate particles tend to be bulky, so that when applied onto an electrode, it may be difficult to increase a density of a positive electrode material in the obtained coating layer. On the other hand, it may be difficult to produce particles having a tap density of more than 1.5 g/cc. The tap density of the ferric phosphate hydrate particles is preferably as large as possible within the above specified range, more preferably 0.7 to 1.5 g/cc and still more preferably 0.75 to 1.45 g/cc.

The ferric phosphate hydrate particles produced in the process of the present invention have an extremely low sodium (Na) content as low as not more than 100 ppm. When the Na content of the ferric phosphate hydrate particles is more than 100 ppm, the Na content of the olivine type lithium iron phosphate particles produced using the ferric phosphate hydrate particles tends to be undesirably too large. In addition, in the ferric phosphate hydrate particles according to the present invention, unreacted iron oxide particles or unreacted iron oxide hydroxide particles derived from the raw material preferably remain in an extremely small amount. The Na content of the ferric phosphate hydrate particles is more preferably not more than 70 ppm and still more preferably 1 to 50 ppm.

Further, the ferric phosphate hydrate particles produced in the process of the present invention adsorb or comprise no sulfur compound ions nor nitrogen compound ions because the particles are produced using the raw material comprising substantially no sulfur compound ions nor nitrogen compound ions. Therefore, the ferric phosphate hydrate particles according to the present invention are free from generation of harmful gases such as SOₓ and NOₓ upon calcination thereof.

Next, the process for producing the ferric phosphate hydrate particles which forms part of the process according to the present invention is described.

The process of producing ferric phosphate hydrate particles comprises reacting fine iron oxide particles or fine iron oxide hydroxide particles having a BET specific surface area of not less than 50 m²/g with a phosphorus compound in a solution thereof in a temperature range of 60 to 100°C while stirring.

If iron oxide particles or iron oxide hydroxide particles having a BET specific surface area of less than 50 m²/g are used, it will be possible to produce only ferric phosphate hydrate particles having a large particle diameter of the order of several µm. In addition, the unreacted iron oxide particles or iron oxide hydroxide particles tends to remain in the reaction solution, resulting in considerable deviation of the molar ratio P/Fe from 1.0 as the value of a theoretical composition. Only when using the iron oxide particles or iron oxide hydroxide particles having a BET specific surface area of not less than 50 m²/g, it is possible to produce the ferric phosphate hydrate particles which are in the form of fine particles and free from deviation of the molar ratio P/Fe. The ferric phosphate hydrate particles are preferably produced by using iron oxide particles or iron oxide hydroxide particles having a BET specific surface area of 80 to 150 m²/g.

The iron oxide particles or iron oxide hydroxide particles used in the present invention are especially preferably fine goethite particles (α-FeOOH) having a large BET specific surface area.

The iron oxide hydroxide particles generally tend to have a spindle shape, an acicular shape or a bar shape. The iron oxide hydroxide particles used in the present invention preferably comprise primary particles having an average major axis diameter of 50 to 200 nm.

The Na component included in the ferric phosphate hydrate particles may be derived from the iron oxide particles or iron oxide hydroxide particles and the phosphorus compound as the raw materials. The content of Na in the iron oxide particles or iron oxide hydroxide particles may considerably vary depending upon the production process and reaction conditions. As a matter of course, a less amount of Na in the raw materials will lead to a less possibility that Na is included in the ferric phosphate hydrate particles. However, in the case where the raw materials are positively purified to a sufficient extent, it is not possible to industrially produce the ferric phosphate hydrate particles at low costs. In addition, in the present invention, after the iron raw material is dissolved in an acid solution, the ferric phosphate hydrate particles are precipitated from the solution. Therefore, Na is eluted in the filtrate and removed from the ferric phosphate hydrate particles. For this reason, the Na content in the iron oxide particles or iron oxide hydroxide particles is preferably about 1000 to about 3000 ppm although not particularly limited thereto.

The amount of the phosphorus compound added is preferably in the range of 100 to 1000% and more preferably 100 to 600% in terms of mol% of phosphorus ions based on iron ions contained in the iron oxide particles or iron oxide hydroxide particles. As the phosphorus compound, there may be suitably used orthophosphoric acid, metaphosphoric acid, phosphorus pentaoxide or the like.

The reaction temperature in the solution is preferably 60 to 100°C. When the reaction temperature is lower than 60°C, an amorphous substance tends to be by-produced as an impurity phase, so that the molar ratio P/Fe is less than 1.0. When the reaction temperature exceeds 100°C, the reaction tends to require the use of a pressure container, etc., resulting in disadvantages from the industrial viewpoints. The reaction is more preferably conducted in a temperature range of 60 to 80°C to thereby produce fine particles.

The reaction in the solution is preferably conducted by adjusting the pH value of the solution to not more than 3. When the pH value of the reaction solution is more than 3, the iron oxide particles or iron oxide hydroxide particles tend to be hardly reacted to a sufficient extent, so that the molar ratio P/Fe of the resulting product tends to become smaller than 1.0. The pH value of the reaction solution may be adjusted by using an acid solution such as sulfuric acid and nitric acid. In addition, the pH value of the solution upon the reaction gives an influence on an Na content and a content of anions as impurities in the obtained product. In the process of the present invention, Na is eluted in the filtrate and thereby removed from the ferric phosphate hydrate particles, so that it is possible to produce the ferric phosphate hydrate particles having an Na content of not more than 100 ppm. However, by controlling the pH value of the reaction solution, it is also possible to further reduce the Na content in the ferric phosphate hydrate particles. As the pH value of the reaction solution is changed from an acid side to a neutral side, the Na content tends to be increased. On the contrary, as the pH value of the reaction solution is changed from a neutral side to an acid side, the content of impurities such as sulfuric acid ions, chloride ions and nitric acid ions which are anions contained in the acid solution used for controlling the pH value, are likely to remain in the resulting ferric phosphate hydrate particles. Therefore, the pH value of the reaction solution is most preferably in the range of 1.5 to 2.5 in which the Na content and the content of the anions as impurities both are small.

The reaction concentration in the solution in terms of an iron concentration thereof is preferably in the range of 0.1 to 3.0 mol/L. When the reaction concentration in the solution is less than 0.1 mol/L, it may be undesirable and difficult to industrially produce the ferric phosphate hydrate particles. When the reaction concentration in the solution is more than 3.0 mol/L, the reaction slurry tends to have an excessively high viscosity, so that it may be difficult to uniformly stir the reaction slurry. The reaction concentration in the solution in terms of an iron concentration thereof is more preferably 0.1 to 1.0 mol/L.

In order to uniformly conduct the reaction, it is required that the an inside of the reactor is uniformly stirred. Under the condition that the reaction system is uniformly stirred, it is possible to appropriately control the stirring speed to obtain aggregated particles having a well-controlled particle diameter. The stirring speed may vary depending upon a shape or size of an agitation blade used upon the stirring. In the present invention, the stirring is preferably conducted by controlling a peripheral speed of an agitation blade of the stirrer to 1.0 to 4.0 m/s and a stirring rotating speed thereof to 1 to 1000 rpm.

The iron oxide particles or the iron oxide hydroxide particles as the raw material may be relatively readily obtained from iron sulfate by a co-precipitation method.

The iron oxide particles or the iron oxide hydroxide particles are crushed or deaggregated using a dry or wet mixing device such as a Henschel mixer, an attritor, a high-speed mixer, a universal stirrer and a ball mill prior to the reaction in the solution, and then mixed with an aqueous solution comprising the phosphorus compound.

After completion of the reaction, an excess amount of water may be removed from the resulting particles using a forced air dryer, a vacuum freeze dryer, a spray dryer, a filter press, a vacuum filter, a filter thickener, etc.

The ferric phosphate hydrate particles produced in the process of the present invention have at least one crystal structure selected from the group consisting of a strengite crystal structure (JCPDS Card No. 33-0667) and a meta-strengite (phosphosiderite) crystal structure (JCPDS Card No. 33-0666). The proportions of the strengite crystal structure and the meta-strengite (phosphosiderite) crystal structure in the ferric phosphate hydrate particles may vary depending upon a plurality of factors such as a mixing ratio of the raw materials, reaction temperature, reaction pH value, reaction concentration, etc. Although it is not easy to strictly determine the proportions of the crystal structures in the ferric phosphate hydrate particles, the proportions of the crystal structures may be conveniently evaluated by a powder X-ray diffraction method as follows. That is, in order to evaluate the proportions of the crystal structures, the diffraction peak intensity of a (122) plane derived from the ferric phosphate hydrate particles having a strengite crystal structure may be compared with the diffraction peak intensity of a (110) plane derived from the ferric phosphate hydrate particles having a meta-strengite (phosphosiderite) crystal structure.

The ratio of the diffraction peak intensity of the (122) plane derived from the strengite crystal structure to the diffraction peak intensity of the (110) plane derived from the meta-strengite (phosphosiderite) crystal structure is hereinafter referred to as a "(122)/(110) peak intensity ratio" which is used as an index of the proportions of the crystal structures. The (122)/(110) peak intensity ratio is preferably in the range of 0.01 to 10 and more preferably 0.01 to 3.

In the ferric phosphate hydrate particles produced in the process of the present invention, when the (122)/(110) peak intensity ratio is not less than 1, the strengite crystal structure is regarded as constituting a first phase thereof. The particles whose first phase is formed by the strengite crystal structure tend to have a granular primary particle shape. In order to obtain the particles having a strengite crystal structure as the first phase thereof, the amount of the phosphorus compound added is preferably in the range of 100 to 120% in terms of mol% of phosphorus ions based on iron ions contained in the iron oxide particles or the iron oxide hydroxide particles.

In addition, when the ferric phosphate hydrate particles produced in the process of the present invention have a strengite crystal structure as a first phase thereof, the ferric phosphate hydrate particles are preferably divided into fine particles by applying a strong shear force thereto during the reaction.

In order to divide the ferric phosphate hydrate particles produced in the process of the present invention into fine particles, the ferric phosphate hydrate particles are preferably stirred at a peripheral speed of 2.5 to 3.2 m/s and a stirring rotating speed of 800 to 1000 rpm.

The secondary particles (aggregated particles) of the fine ferric phosphate hydrate particles produced in the process of the present invention having a strengite crystal structure as their first phase preferably have an average secondary particle diameter of 3 to 10 µm. The average secondary particle diameter of the ferric phosphate hydrate particles is more preferably 5 to 8 µm.

On the other hand, in the ferric phosphate hydrate particles produced in the process of the present invention, when the (122)/(110) peak intensity ratio is less than 1, it is determined that a meta-strengite (phosphosiderite) crystal structure constitutes a first phase of the ferric phosphate hydrate particles. The particles having a meta-strengite (phosphosiderite) crystal structure as a fist phase thereof tend to have a thin plate shape as a primary particle shape thereof. In order to obtain the particles having a meta-strengite (phosphosiderite) crystal structure as their fist phase, the amount of the phosphorus compound added is preferably in the range of 120 to 1000% and more preferably 200 to 600% in terms of mol% of phosphorus ions based on iron ions contained in the iron oxide particles or the iron oxide hydroxide particles.

Also, in the ferric phosphate hydrate particles produced in the process of the present invention, in order to obtain the particles having a meta-strengite (phosphosiderite) crystal structure as a fist phase thereof, the plate-shaped primary particles thereof are preferably densely aggregated together by suppressing a shear force applied thereto during the reaction to thereby form aggregated particles of the ferric phosphate hydrate particles as secondary particles thereof.

In order to obtain the ferric phosphate hydrate particles produced in the process of the present invention in the form of aggregated particles having a less content of fine particles, the peripheral speed of the agitation blade upon stirring the ferric phosphate hydrate particles is preferably adjusted to 1.0 to 1.5 m/s, and the stirring rotating speed thereupon is preferably adjusted to 150 to 350 rpm.

When the ferric phosphate hydrate particles produced in the process of the present invention are obtained in the form of aggregated particles as secondary particles thereof which are formed by aggregating plate-shaped primary particles, it is possible to the ferric phosphate hydrate particles having a high tap density.

The secondary particles (aggregated particles) of the ferric phosphate hydrate particles having a meta-strengite (phosphosiderite) crystal structure as a fist phase thereof according to the process of the present invention which are formed by aggregating plate-shaped primary particles preferably have an average secondary particle diameter of 5 to 20 µm. The average secondary particle diameter of the ferric phosphate hydrate particles is more preferably 8 to 18 µm.

The aggregated particles of the ferric phosphate hydrate particles having a meta-strengite (phosphosiderite) crystal structure as a fist phase thereof produced in the process of the present invention which are secondary particles formed by aggregating thin plate-shaped primary particles preferably have a tap density of 0.7 to 1.5 g/cc. The tap density of the ferric phosphate hydrate particles is preferably as large as possible within the above-specified range, more preferably 0.7 to 1.45 g/cc and still more preferably 0.75 to 1.45 g/cc.

Next, the process for producing the olivine type lithium iron phosphate particles by using the ferric phosphate hydrate particles produced in the process according to the present invention is described.

In the process for producing the olivine type lithium iron phosphate particles according to the present invention, the ferric phosphate hydrate particles produced in the process according to the present invention are uniformly pulverized and mixed together with a lithium compound and an organic compound by a dry or wet method, and then the resulting mixture is heat-treated in a reducing atmosphere or an inert atmosphere at a temperature of 300 to 800°C.

The pulverizing or mixing device used when pulverized and mixed by a dry or wet method is not particularly limited as long as it is capable of uniformly pulverizing and mixing the respective components. Examples of the pulverizing or mixing device include a ball mill, a vibration mill, a planetary ball mill, a paint shaker, a high-speed rotary blade type mill and a jet mill.

The amount of the lithium compound added is preferably in the range of 100 to 120% in terms of mol% based on iron ions contained in the ferric phosphate hydrate particles. Examples of the lithium compound include lithium hydroxide and lithium carbonate.

In the process for producing the olivine type lithium iron phosphate particles according to the present invention, the organic compound is added for the purpose of allowing the organic compound to exhibit a reducing effect upon the calcination and adhering a conductive carbonaceous substance produced after the calcination onto the surface of the respective olivine type lithium iron phosphate particles.

When calcined in an inert atmosphere, the addition of the organic compound as a reducing agent is essential. The organic compound used for this purpose is not particularly limited as long as it can exhibit a reducing property upon the calcination. Examples of the organic compound include sugars such as monosaccharides, disaccharides, trisaccharides and polysaccharides, fatty acids such as saturated fatty acids and unsaturated fatty acids, and resins such as polyethylene and polyvinyl alcohol.

When calcined in a reducing atmosphere, the addition of the organic compound as a reducing agent is not necessarily essential. However, in the case where the olivine type lithium iron phosphate particles which are known as a substance having a poor conductivity are used as a positive electrode material for non-aqueous electrolyte secondary batteries, it is effective to adhere a conductive carbonaceous substance onto the surface of the respective particles in order to improve characteristics of the resulting batteries.

For the purpose of adhering the conductive carbonaceous substance onto the surface of the respective olivine type lithium iron phosphate particles, the conductive carbonaceous substance such as carbon black, koechen black and carbon fibers as the organic compound may be previously mixed with the raw materials, and then the resulting mixture may be calcined in an inert atmosphere or a reducing atmosphere.

Both the organic compound as a reducing agent and the conductive carbonaceous substance as a conductive agent may be mixed with the raw materials, and then the resulting mixture may be calcined.

The organic compound is preferably added in an amount of 5 to 20% by weight based on a total weight of the ferric phosphate hydrate particles according to the present invention and the lithium compound.

The calcination may be a heat treatment conducted in a gas flowing type box-shaped muffle furnace, a gas flowing type rotary furnace, a fluidized heat treatment furnace, etc. Examples of the inert atmosphere include nitrogen, helium, argon or the like. Examples of the reducing atmosphere include hydrogen, carbon monoxide or the like.

The heating calcination temperature is preferably 300 to 800°C. When the heating calcination temperature is lower than 300°C, the reduction reaction of iron ions may fail to proceed to a sufficient extent, so that the crystal phases other than the olivine type lithium iron phosphate tend to remain in the resulting particles. When the heating calcination temperature is higher than 800°C, undesirable other crystal phases tend to be generated.

Next, the olivine type lithium iron phosphate particles produced in the process of the present invention are described.

The olivine type lithium iron phosphate particles produced according to the process of the present invention preferably have a BET specific surface area of 10 to 100 m²/g.

The olivine type lithium iron phosphate particles produced according to the process of the present invention preferably comprise carbon in an amount of 1 to 10% by weight.

The olivine type lithium iron phosphate particles produced according to the process of the present invention preferably have a sodium (Na) content of not more than 10 ppm.

The olivine type lithium iron phosphate particles produced according to the process of the present invention preferably have an average primary particle diameter of 50 to 300 nm.

The olivine type lithium iron phosphate particles produced according to the process of the present invention preferably have an average secondary particle diameter of 5 to 20 µm and more preferably 8 to 18 µm.

The olivine type lithium iron phosphate particles produced according to the process of the present invention preferably have a tap density of 0.7 to 1.5 g/cc, more preferably 0.75 to 1.45 g/cc and still more preferably 0.8 to 1.45 g/cc.

Next, the process for producing a positive electrode using the positive electrode active substance comprising the olivine type lithium iron phosphate particles produced according to the process of the invention is described.

When producing the positive electrode using the olivine type lithium iron phosphate particles produced according to the process of the present invention, a conducting agent and a binder are added to the positive electrode active substance by an ordinary method. Examples of the preferred conducting agent include acetylene black, carbon black and graphite. Examples of the preferred binder include polytetrafluoroethylene and polyvinylidene fluoride.

The secondary battery produced by using the olivine type composite oxide particles produced in the process according to the present invention comprises the above positive electrode, a negative electrode and an electrolyte.

Examples of a negative electrode active substance which may be used for the negative electrode include metallic lithium, lithium/aluminum alloy, lithium/tin alloy, and graphite or black lead.

Also, as a solvent for the electrolyte solution, there may be used combination of ethylene carbonate and diethyl carbonate, as well as an organic solvent comprising at least one compound selected from the group consisting of carbonates such as propylene carbonate and dimethyl carbonate, and ethers such as dimethoxyethane.

Further, as the electrolyte, there may be used a solution prepared by dissolving not only lithium phosphate hexafluoride but also at least one lithium salt selected from the group consisting of lithium perchlorate and lithium borate tetrafluoride in the above solvent.

The non-aqueous electrolyte secondary battery produced by using the olivine type lithium iron phosphate particles produced in the process according to the present invention can exhibit excellent charge/discharge characteristics including an initial discharge capacity of 150 to 165 mAh/g at a charge/discharge rate of c/10.

### EXAMPLES

Next, the present invention is described in more detail by the following Examples. However, the following Examples are only illustrative and not intended to limit the invention thereto. In the followings, the evaluation methods used in the following Examples and Comparative Examples are described.

The specific surface area was determined by subjecting a sample to drying and deaeration at 110°C for 45 min under a nitrogen gas atmosphere and then measuring a specific surface area of the thus treated sample by a BET one-point continuous method using "MONOSORB" manufactured by Uasa Ionics Inc.

The carbon content was measured using a carbon and sulfur analyzer "EMIA-820" manufactured by Horiba Seisakusho Co., Ltd.

The Na content and the molar ratio P/Fe were measured by subjecting a solution in which a sample was dissolved to ICP analysis using an inductively coupled plasma emission spectrometric analyzer "ICAP-6500" manufactured by Thermo Fisher Scientific K.K.

The crystal structure of the particles was measured using an X-ray diffraction analyzer "RINT-2500" manufactured by Rigaku Corp., under the conditions of Cu-Kα, 40 kV and 300 mA. In addition, the crystallite size was calculated from the value obtained by Rietveld analysis of an X-ray diffraction pattern as measured using an analyzing program "RIETAN-2000".

The average primary particle diameter was measured using an ultrahigh resolution field emission type scanning electron microscope "S-4800" manufactured by Hitachi Limited (average value of 50 diameters on the micrograph).

The average secondary particle diameter was measured using a laser diffraction scattering type particle size distribution meter "HELOS" manufactured by Japan Laser Corp., to determine a median diameter D₅₀ thereof.

The tap density was determined from a density of a powder as measured after tapping a sample 500 times using a tap denser "KYT-3000" manufactured by Seishin Kigyo Co., Ltd.

The coin cell produced using the olivine type lithium iron phosphate particles was evaluated for initial charge/discharge characteristics and a rate characteristic.

First, 88% by weight of the olivine type lithium iron phosphate particles as a positive electrode active substance, 4% by weight of acetylene black as a conductive agent, and 8% by weight of polyvinylidene fluoride dissolved in N-methyl pyrrolidone as a binder, were mixed with each other, and the resulting mixture was applied onto an Al metal foil and then dried at 120°C. The thus obtained sheets were blanked into 160 mmφ and then compression-bonded to each other under a pressure of 5 t/cm², thereby producing an electrode having a thickness of 50 µm and using the thus produced electrode as a positive electrode. A metallic lithium blanked into 160 mmφ was used as a negative electrode, and a solution prepared by mixing EC and DMC in which 1 mol/L of LiPF₆ was dissolved, with each other at a volume ratio of 1:2 was used as an electrolyte solution, thereby producing a coin cell of a CR2032 type.

Under the condition in which the temperature was kept constant at 25°C, the cell was charged until reaching 4.3 V and then discharged until reaching 2.0 V to measure initial charge/discharge characteristics thereof. The rate characteristic of the cell was measured at 0.1C and 5.0C by setting 170 mAh/g as a theoretical capacity thereof.

### EXAMPLE 1

### <Example 1-1>

A heating type mixing stirrer was charged with 1147 g of a 25% slurry of iron oxide hydroxide particles having a BET specific surface area of 98.5 m²/g, and an orthophosphoric acid solution was added thereto while stirring such that the molar ratio P/Fe was 1.1. The liquid amount of the resulting mixed slurry was adjusted to a volume of 10 L by adding ion-exchanged water thereto such that the reaction concentration based on an iron concentration thereof was 0.3 mol/L. Thereafter, the resulting slurry was heated to 60°C while rotating an agitation blade of the stirrer at a peripheral speed of 2.8 m/s and a rotating speed of 900 rpm and therefore while subjecting the slurry to high-speed stirring, and the contents of the mixing stirrer were reacted for 16 hr under the condition that the temperature therein was held at 60°C. After completion of the reaction, the slurry was withdrawn from the mixing stirrer, washed with water in an amount of three times the volume of the slurry using a filter press, and then subjected to drying treatment at 110°C for 12 hr using a forced air dryer, thereby obtaining 555 g of dried particles.

As a result of subjecting the resulting particles to powder X-ray diffraction measurement, it was confirmed that the obtained particles were ferric phosphate hydrate particles comprising a compound consistent with a strengite crystal structure as a main first phase and a compound consistent with a meta-strengite (phosphosiderite) crystal structure as a second phase, and had a (122)/(110) peak intensity ratio of 1.98, and further comprised no impurity phase.

It was also confirmed that the obtained particles had a BET specific surface area of 20.3 m²/g and an Na content of 14 ppm. Further, since the molar ratio P/Fe of the particles was 1.01, it was confirmed that the resulting ferric phosphate hydrate particles had a molar ratio P/Fe extremely near to a theoretical composition thereof.

As a result of photographing the obtained particles using a scanning electron microscope, it was confirmed that the particles were polyhedral fine particles having a an average primary particle diameter of 200 nm, and the shape of secondary particles thereof was an amorphous shape.

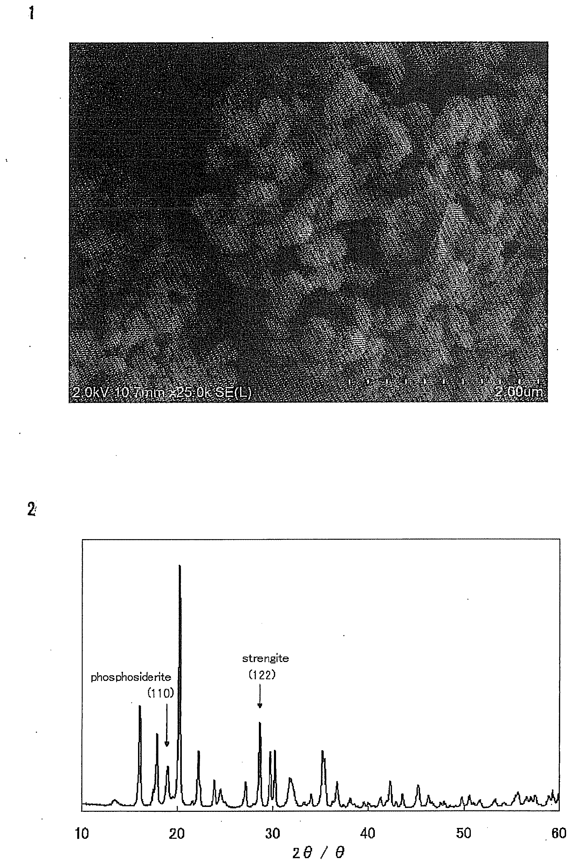

As a result of measuring a particle diameter of the particles by a laser diffraction method, it was also confirmed that the particles had an average secondary particle diameter of 6.4 µm and a tap density of 0.51 g/cc. The scanning electron micrograph of the resulting particles is shown in FIG. 1, and the powder X-ray diffraction pattern thereof is shown in FIG. 2.

### <Example 2-1>

A zirconia planetary ball mill pot was charged with 35 g of the ferric phosphate hydrate particles obtained in Example 1-1, 8.15 g of lithium hydroxide monohydrate, 4.32 g of sucrose and 120 mL of ethanol and further with 450 g of φ3 mm zirconia beads, and the contents of the pot were subjected to wet mixing and pulverization treatment at 300 rpm for 2 hr. The slurry obtained after the pulverization treatment was subjected to solid-liquid separation using a Nutsche, and the thus separated solid was dried at 80°C for 6 hr using a dryer.

The resulting dried product was deaggregated using a mortar, and calcined in a nitrogen atmosphere at 725°C for 3 hr and then passed through a 75 µm-mesh sieve to obtain olivine type lithium iron phosphate particles.

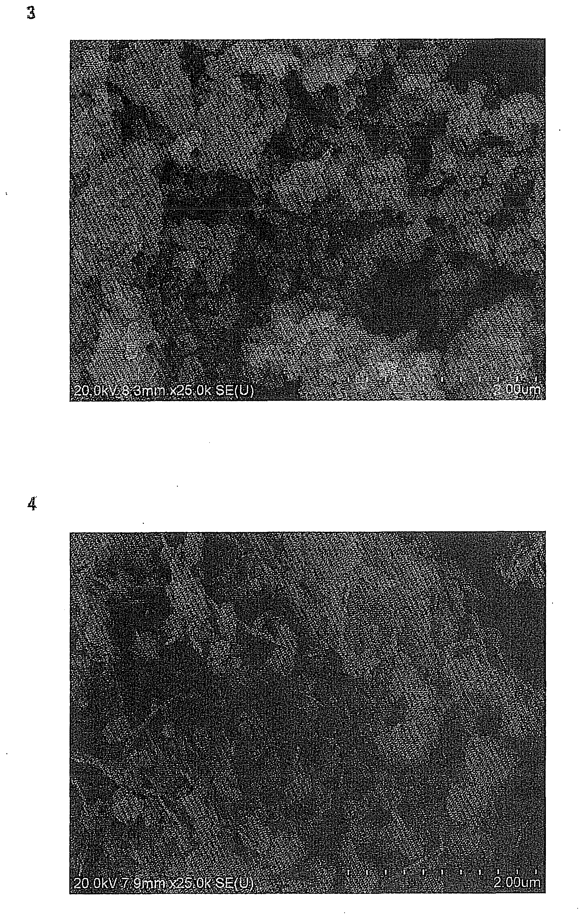

It was confirmed that the resulting calcined product had a BET specific surface area of 31.8 m²/g, a tap density of 0.75 g/cc, a carbon content of 2.70% by weight and an Na content of 70 ppm. As a result of the observation using a scanning electron microscope, it was confirmed that the resulting particles were fine particles having an average primary particle diameter of 100 nm. In addition, as a result of Rietveld analysis, it was confirmed that the resulting particles had a crystallite size of about 220 nm, and the secondary particle shape was an amorphous shape. The scanning electron micrograph of the thus obtained lithium iron phosphate particles is shown in FIG. 3.

### EXAMPLE 2

### <Example 1-2>

The same reaction procedure as defined in Example 1-1 was conducted except that the wet reaction temperature was changed from 60°C to 80°C, thereby obtaining a reaction product.

As a result of subjecting the resulting particles to powder X-ray diffraction measurement, it was confirmed that the obtained particles were ferric phosphate hydrate particles comprising a compound consistent with a strengite crystal structure as a main first phase and a compound consistent with a meta-strengite (phosphosiderite) crystal structure as a second phase, and had a (122)/(110) peak intensity ratio of 1.07, and further comprised no impurity phase.

It was also confirmed that the obtained particles had a BET specific surface area of 13.8 m²/g and an Na content of 16 ppm. Further, since the molar ratio P/Fe of the particles was 0.98, it was confirmed that the resulting ferric phosphate hydrate particles had a molar ratio P/Fe extremely near to a theoretical composition thereof.

As a result of photographing the obtained particles using a scanning electron microscope, it was confirmed that the particles were polyhedral fine particles having a an average primary particle diameter of 300 nm, and the shape of secondary particles thereof was an amorphous shape.

As a result of measuring a particle diameter of the particles by a laser diffraction method, it was also confirmed that the particles had an average secondary particle diameter of 5.0 µm and a tap density of 0.66 g/cc.

### <Example 2-2>

A zirconia planetary ball mill pot was charged with 35 g of the ferric phosphate hydrate particles obtained in Example 1-2, 8.15 g of lithium hydroxide monohydrate, 4.32 g of sucrose and 120 mL of ethanol and further with 300 g of φ5 mm zirconia beads, and the contents of the pot were subjected to wet mixing and pulverization treatment at 300 rpm for 4 hr. The slurry obtained after the pulverization treatment was subjected to solid-liquid separation using a Nutsche, and the thus separated solid was dried at 80°C for 6 hr using a dryer.

The resulting dried product was deaggregated using a mortar, and calcined in a nitrogen atmosphere at 725°C for 3 hr and then passed through a 75 µm-mesh sieve to obtain olivine type lithium iron phosphate particles.

It was confirmed that the resulting calcined product had a BET specific surface area of 28.3 m²/g, a tap density of 0.9 g/cc, a carbon content of 2.31% by weight and an Na content of 75 ppm. As a result of the observation using a scanning electron microscope, it was confirmed that the resulting particles were fine particles having an average primary particle diameter of 120 nm. In addition, as a result of Rietveld analysis, it was confirmed that the resulting particles had a crystallite size of about 240 nm, and the secondary particle shape was an amorphous shape.

### EXAMPLE 3

### <Example 1-3>

A 25% slurry of iron oxide hydroxide particles having a BET specific surface area of 120.0 m²/g was deaggregated for 12 hr using φ5 mm zirconia balls. Next, 1147 g of the thus deaggregated slurry were charged into a heating type mixing stirrer, and an orthophosphoric acid solution was added thereto while stirring such that the molar ratio P/Fe was 1.02. The liquid amount of the resulting mixed slurry was adjusted to a volume of 10 L by adding ion-exchanged water thereto such that the reaction concentration based on an iron concentration thereof was 0.3 mol/L. Thereafter, the resulting slurry was heated to 70°C while rotating an agitation blade of the stirrer at a peripheral speed of 2.8 m/s and a rotating speed of 900 rpm and therefore while subjecting the slurry to high-speed stirring, and the contents of the mixing stirrer were reacted for 18 hr under the condition that the temperature therein was held at 70°C. After completion of the reaction, the slurry was withdrawn from the mixing stirrer, washed with water in an amount of three times the volume of the slurry using a filter press, and then subjected to drying treatment at 110°C for 12 hr using a forced air dryer, thereby obtaining 555 g of dried particles.

As a result of subjecting the resulting particles to powder X-ray diffraction measurement, it was confirmed that the obtained particles were ferric phosphate hydrate particles comprising a compound consistent with a strengite crystal structure as a main first phase and a compound consistent with a meta-strengite (phosphosiderite) crystal structure as a second phase, and had a (122)/(110) peak intensity ratio of 1.28, and further comprised no impurity phase.

It was also confirmed that the obtained particles had a BET specific surface area of 17.5 m²/g and an Na content of 15 ppm. Further, since the molar ratio P/Fe of the particles was 1.00, it was confirmed that the resulting ferric phosphate hydrate particles had a molar ratio P/Fe identical to a theoretical composition thereof.

As a result of photographing the obtained particles using a scanning electron microscope, it was confirmed that the particles were polyhedral fine particles having an average primary particle diameter of 250 nm, and the shape of secondary particles thereof was an amorphous shape.

As a result of measuring a particle diameter of the particles by a laser diffraction method, it was also confirmed that the particles had an average secondary particle diameter of 5.3 µm and a tap density of 0.60 g/cc.

### <Example 2-3>

A polypropylene pot was charged with 10 g of the ferric phosphate hydrate particles obtained in Example 1-3, 2.30 g of lithium hydroxide monohydrate, 1.23 g of sucrose and 120 mL of ethanol and further with 850 g of φ5 mm zirconia beads, and the contents of the pot were subjected to wet mixing and pulverization treatment at 200 rpm for 24 hr. The slurry obtained after the pulverization treatment was subjected to solid-liquid separation using a Nutsche, and then the thus separated solid was dried at 80°C for 6 hr using a dryer.

The resulting dried product was deaggregated using a mortar, and then calcined in a nitrogen atmosphere at 725°C for 3 hr to obtain olivine type lithium iron phosphate particles.

It was confirmed that the resulting calcined product had a BET specific surface area of 23.1 m²/g, a tap density of 0.85 g/cc, a carbon content of 3.46% by weight and an Na content of 75 ppm. As a result of the observation using a scanning electron microscope, it was confirmed that the resulting particles were fine particles having an average primary particle diameter of 130 nm. In addition, as a result of Rietveld analysis, it was confirmed that the resulting particles had a crystallite size of about 250 nm, and the secondary particle shape was an amorphous shape.

### EXAMPLE 4

### <Example 1-4>

A heating type mixing stirrer was charged with 3057 g of a 25% slurry of iron oxide hydroxide particles having a BET specific surface area of 120.0 m²/g, and an orthophosphoric acid solution was added thereto while stirring such that the molar ratio P/Fe was 1.1. The liquid amount of the resulting mixed slurry was adjusted to a volume of 10 L by adding ion-exchanged water thereto such that the reaction concentration based on an iron concentration thereof was 0.8 mol/L. Thereafter, the resulting slurry was heated to 70°C while rotating an agitation blade of the stirrer at a peripheral speed of 2.8 m/s and a rotating speed of 900 rpm and therefore while subjecting the slurry to high-speed stirring, and the contents of the mixing stirrer were reacted for 19 hr under the condition that the temperature therein was held at 70°C. After completion of the reaction, the slurry was withdrawn from the mixing stirrer, washed with water in an amount of three times the volume of the slurry using a filter press, and then subjected to drying treatment at 110°C for 12 hr using a forced air dryer, thereby obtaining 1490 g of dried particles.

As a result of subjecting the resulting particles to powder X-ray diffraction measurement, it was confirmed that the obtained particles were ferric phosphate hydrate particles comprising a compound consistent with a meta-strengite (phosphosiderite) crystal structure as a main first phase and a compound consistent with a strengite crystal structure as a second phase, and had a (122)/(110) peak intensity ratio of 0.53, and further comprised no impurity phase.

It was also confirmed that the obtained particles had a BET specific surface area of 32.4 m²/g and an Na content of 16 ppm. Further, since the molar ratio P/Fe of the particles was 1.01, it was confirmed that the resulting ferric phosphate hydrate particles had a molar ratio P/Fe extremely near to a theoretical composition thereof.

As a result of photographing the obtained particles using a scanning electron microscope, it was confirmed that the particles were plate-shaped fine particles having a an average primary particle diameter of 200 nm, and the shape of secondary particles thereof was an amorphous shape.

As a result of measuring a particle diameter of the particles by a laser diffraction method, it was also confirmed that the particles had an average secondary particle diameter of 5.7 µm and a tap density of 0.45 g/cc. The scanning electron micrograph of the resulting particles is shown in FIG. 4.

### <Example 2-4>

A polypropylene pot was charged with 10 g of the ferric phosphate hydrate particles obtained in Example 1-4, 2.30 g of lithium hydroxide monohydrate, 1.23 g of sucrose and 120 mL of ethanol and further with 850 g of φ5 mm zirconia beads, and the contents of the pot were subjected to wet mixing and pulverization treatment at 200 rpm for 24 hr. The slurry obtained after the pulverization treatment was subjected to solid-liquid separation using a Nutsche, and then the thus separated solid was dried at 80°C for 6 hr using a dryer.

The resulting dried product was deaggregated using a mortar, and then calcined in a nitrogen atmosphere at 725°C for 3 hr to obtain olivine type lithium iron phosphate particles.

It was confirmed that the resulting calcined product had a BET specific surface area of 29.0 m²/g, a tap density of 0.77 g/cc, a carbon content of 2.92% by weight and an Na content of 70 ppm. As a result of the observation using a scanning electron microscope, it was confirmed that the resulting particles were fine particles having an average primary particle diameter of 100 nm. In addition, as a result of Rietveld analysis, it was confirmed that the resulting particles had a crystallite size of about 230 nm, and the secondary particle shape was an amorphous shape.

### COMPARATIVE EXAMPLE 1

### <Comparative Example 1-1>

The same reaction procedure as defined in Example 1-1 was conducted except that the wet reaction temperature was changed from 60°C to 50°C, thereby obtaining a reaction product.

As a result of subjecting the resulting particles to powder X-ray diffraction measurement, it was confirmed that the obtained particles were ferric phosphate hydrate particles comprising a compound consistent with a strengite crystal structure as a main first phase and a compound consistent with a meta-strengite (phosphosiderite) crystal structure as a second phase and further comprising an amorphous phase as an impurity phase, and had a (122)/(110) peak intensity ratio of 1.20.

It was also confirmed that the obtained particles had a BET specific surface area of 36.0 m²/g and an Na content of 63 ppm. Further, since the molar ratio P/Fe of the particles was 0.83, it was confirmed that the resulting particles had a molar ratio P/Fe deviated by about 17% from a theoretical composition thereof.

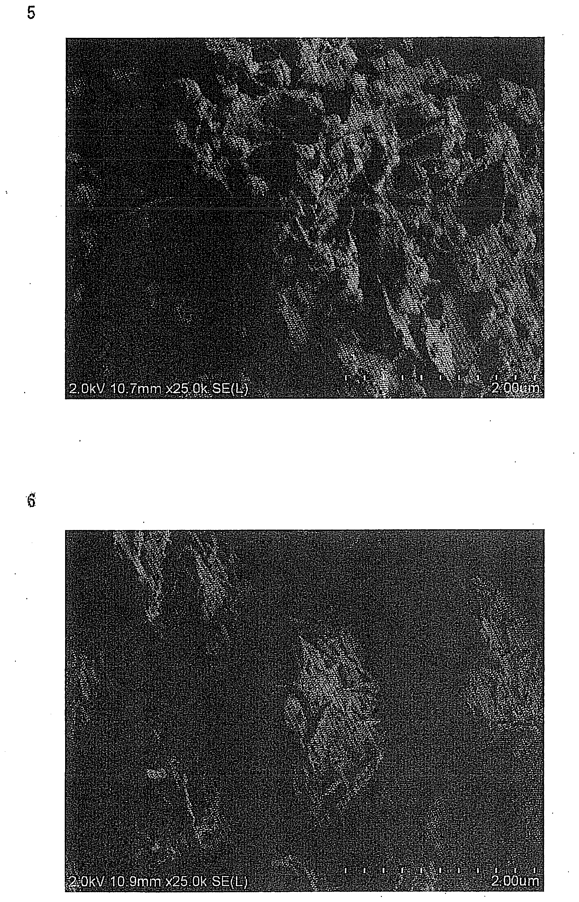

As a result of photographing the obtained particles using a scanning electron microscope, it was confirmed that the particles were in the form of a mixture comprising granular fine particles having an average primary particle diameter of about 200 nm and thin amorphous plate-shaped particles having a plate surface diameter of about 1 µm. As a result of measuring a particle diameter of the particles by a laser diffraction method, it was also confirmed that the particles had an average secondary particle diameter of 7.0 µm and a tap density of 0.48 g/cc. The scanning electron micrograph of the resulting particles is shown in FIG. 5.

### <Comparative Example 2-1>

A zirconia planetary ball mill pot was charged with 35 g of the ferric phosphate hydrate particles obtained in Comparative Example 1-1, 8.15 g of lithium hydroxide monohydrate, 4.32 g of sucrose and 120 mL of ethanol and further with 450 g of φ3 mm zirconia beads, and the contents of the pot were subjected to wet mixing and pulverization treatment at 300 rpm for 6 hr. The slurry obtained after the pulverization treatment was subjected to solid-liquid separation using a Nutsche, and the thus separated solid was dried at 80°C for 6 hr using a dryer.

The resulting dried product was deaggregated using a mortar, and calcined in a nitrogen atmosphere at 725°C for 3 hr to obtain olivine type lithium iron phosphate particles.

It was confirmed that the resulting calcined product had a BET specific surface area of 35.2 m²/g, a tap density of 0.75 g/cc, a carbon content of 2.9% by weight and an Na content of 100 ppm. As a result of the observation using a scanning electron microscope, it was confirmed that the resulting particles were fine particles having an average primary particle diameter of 120 nm. In addition, as a result of Rietveld analysis, it was confirmed that the resulting particles had a crystallite size of about 200 nm.

### COMPARATIVE EXAMPLE 2

### <Comparative Example 1-2>

A heating type mixing stirrer was charged with 1056 g of a 5.8% slurry of iron oxide hydroxide particles having a BET specific surface area of 32.0 m²/g, and an orthophosphoric acid solution was added thereto while stirring such that the molar ratio P/Fe was 1.1. The liquid amount of the resulting mixed slurry was adjusted to a volume of 10 L by adding ion-exchanged water thereto such that the reaction concentration based on an iron concentration thereof was 0.3 mol/L. Thereafter, the resulting slurry was heated to 80°C while rotating an agitation blade of the stirrer at a peripheral speed of 2.8 m/s and a rotating speed of 900 rpm and therefore while subjecting the slurry to high-speed stirring, and the contents of the mixing stirrer were reacted for 16 hr under the condition that the temperature therein was held at 80°C. After completion of the reaction, the slurry was withdrawn from the mixing stirrer, washed with water in an amount of three times the volume of the slurry using a filter press, and then subjected to drying treatment at 110°C for 12 hr using a forced air dryer, thereby obtaining 550 g of dried particles.

As a result of subjecting the resulting particles to powder X-ray diffraction measurement, it was confirmed that the obtained particles were ferric phosphate hydrate particles comprising a compound consistent with a strengite crystal structure as a main first phase and a compound consistent with a meta-strengite (phosphosiderite) crystal structure as a second phase and further comprising unreacted iron oxide hydroxide as an impurity phase, and had a (122)/(110) peak intensity ratio of 12.1.

It was also confirmed that the obtained particles had a BET specific surface area of 5.0 m²/g and an Na content of 120 ppm. Further, since the molar ratio P/Fe of the particles was 0.72, it was confirmed that the resulting particles had a molar ratio P/Fe deviated by about 28% from a theoretical composition thereof.

As a result of photographing the obtained particles using a scanning electron microscope, it was confirmed that the particles comprised large particles of an octahedral shape having an average primary particle diameter of not less than 1 µm and unreacted iron oxide hydroxide particles adhered around the large particles. As a result of measuring a particle diameter of the particles by a laser diffraction method, it was also confirmed that the particles had an average secondary particle diameter of 2.1 µm and a tap density of 1.038 g/cc. The scanning electron micrograph of the resulting particles is shown in FIG. 6.

Thus, since the resulting particles had a deviated molar ratio P/Fe, if the particles were directly used as a raw material for the olivine type lithium iron phosphate particles, undesired different phases were generated after the calcination which resulted in deteriorated capacity thereof. In addition, the resulting particles were large particles having an average primary particle diameter of not less than 1 µm and therefore were excessively large as a precursor of the olivine type lithium iron phosphate particles having a particle diameter of a submicron-order. For this reason, the particles were subjected to no calcination.

### COMPARATIVE EXAMPLE 3

### <Comparative Example 1-3>

As the ferric phosphate hydrate particles, there were used ferric phosphate dihydrate particles commercially available from Aldrich Inc.

The ferric phosphate dihydrate particles commercially available from Aldrich Inc., had a BET specific surface area of 30.4 m²/g and an Na content of more than 10000 ppm. In addition, it was confirmed that the Aldrich particles had a molar ratio P/Fe of 0.99 which therefore exhibited substantially no deviation from a theoretical composition thereof.

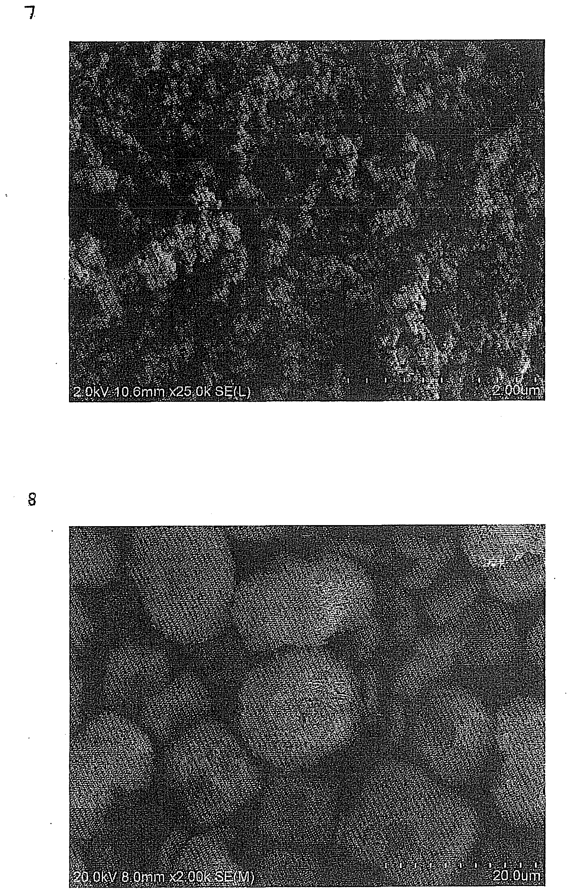

As result of subjecting the ferric phosphate dihydrate particles commercially available from Aldrich Inc., to powder X-ray diffraction analysis, it was confirmed that the particles were amorphous. The scanning electron micrograph of the ferric phosphate dihydrate particles commercially available from Aldrich Inc., is shown in FIG. 7.

### <Comparative Example 2-3>

The calcination was conducted in the same manner as defined in Example 2-1 except that the ferric phosphate dihydrate particles commercially available from Aldrich Inc., were used, thereby obtaining a calcined product.

As a result of subjecting the calcined product to powder X-ray diffraction analysis, it was confirmed that in addition to the olivine type lithium iron phosphate phase, a maricite phase (NaFePO₄) was detected as an impurity phase. The impurity phase was apparently caused by an excessively large amount of Na contained as an impurity in the ferric phosphate dihydrate particles used as a precursor thereof. Notwithstanding that the calcination was conducted under the same conditions as used in Example 2-1, impurity phases such as Fe and Li₃PO₄ were also detected. It was also confirmed that the resulting calcined product had a BET specific surface area of 17.5 m²/g, a tap density of 0.75 g/cc, a carbon content of 1.6% by weight and an Na content of more than 10000 ppm. As a result of the observation using a scanning electron microscope, it was confirmed that the resulting calcined product was in the form of fine particles having an average primary particle diameter of 80 nm. In addition, as a result of Rietveld analysis, it was confirmed that the resulting particles had a crystallite size of about 150 nm.

The production conditions of the ferric phosphate hydrate particles obtained in Examples 1-1 to 1-4 and Comparative Examples 1-1 to 1-3 are shown in Table 1, and various properties of the thus obtained ferric phosphate hydrate particles are shown in Table 2.

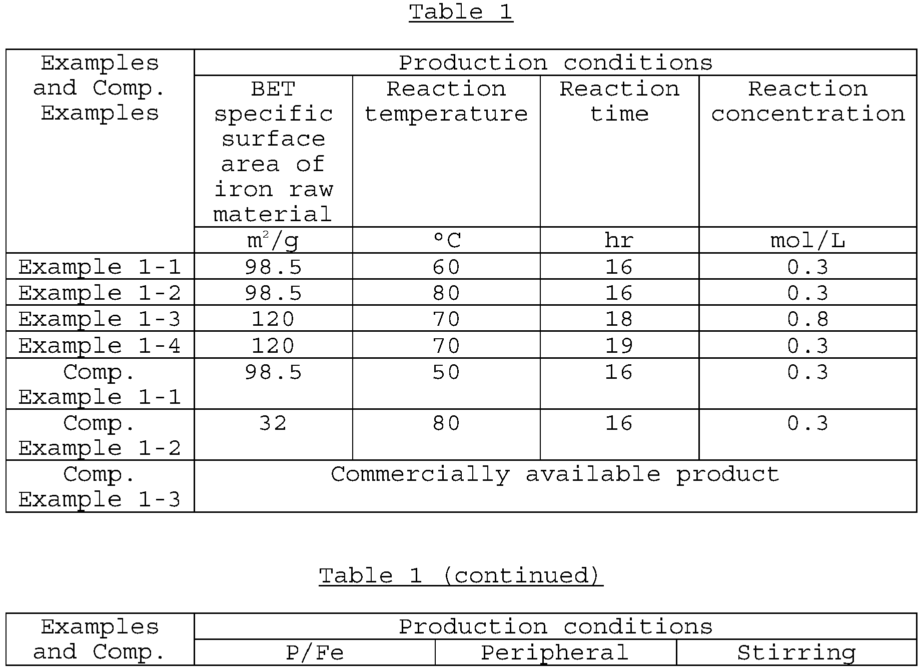

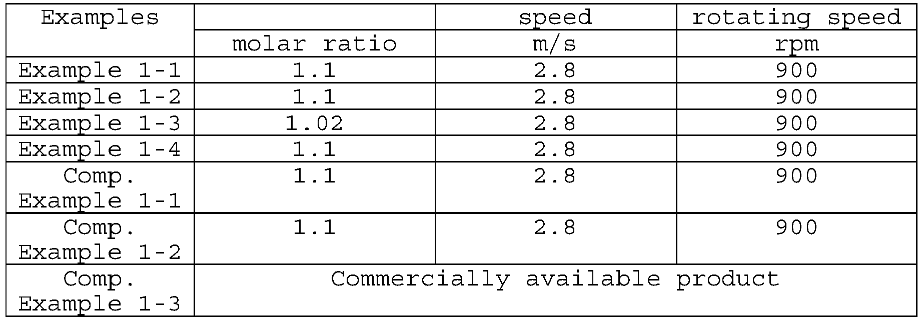

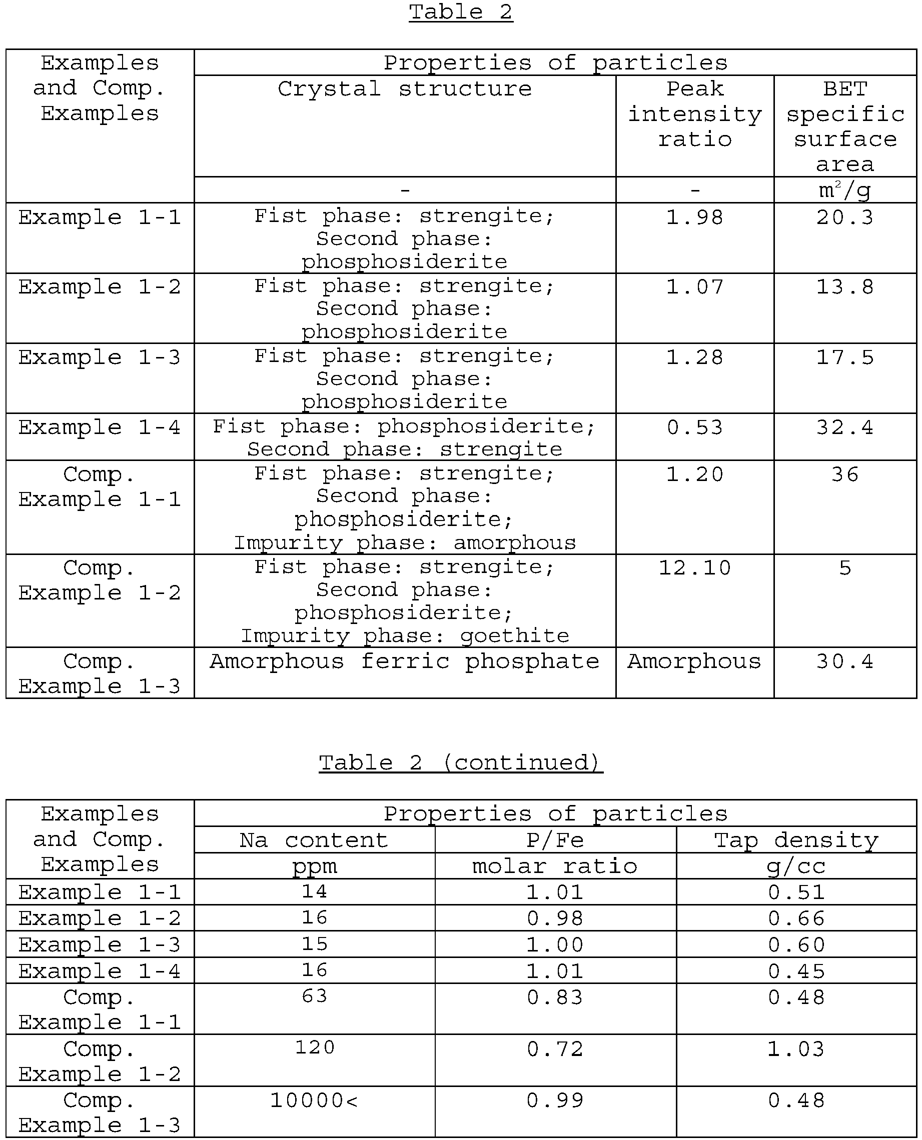

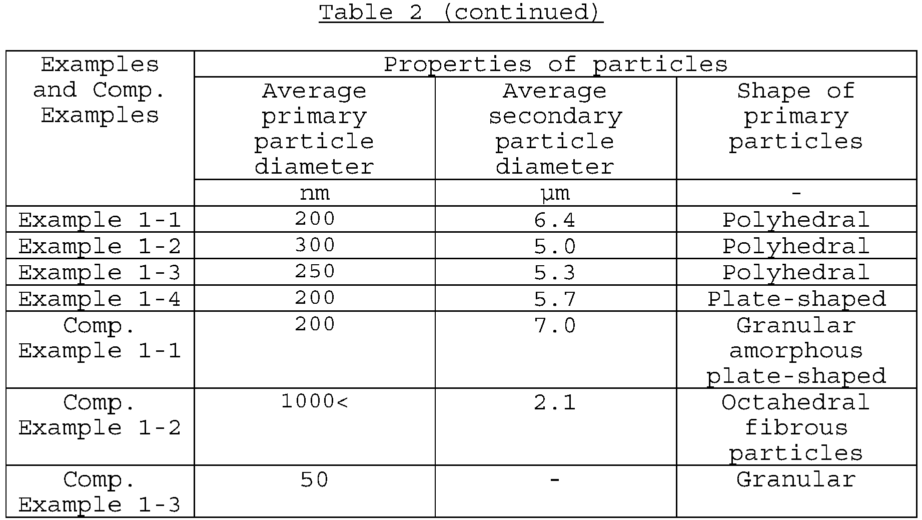

### EXAMPLE 5

### <Example 1-5>

A heating type mixing stirrer was charged with 1176 g of a 6% slurry of iron oxide hydroxide particles having a BET specific surface area of 90.5 m²/g, and an orthophosphoric acid solution was added thereto while stirring such that the molar ratio P/Fe was 3.0. The liquid amount of the resulting mixed slurry was adjusted to a volume of 1.5 L by adding ion-exchanged water thereto such that the reaction concentration based on an iron concentration thereof was 0.5 mol/L. Thereafter, the resulting slurry was heated to 85°C while rotating an agitation blade of the stirrer at a peripheral speed of 1.5 m/s and a rotating speed of 300 rpm and therefore while subjecting the slurry to low-speed stirring, and the contents of the mixing stirrer were reacted for 4 hr under the condition that the temperature therein was held at 85°C. After completion of the reaction, the slurry was withdrawn from the mixing stirrer, washed with water in an amount of three times the volume of the slurry using a Nutsche, and then subjected to drying treatment at 110°C for 12 hr using a forced air dryer, thereby obtaining 140 g of dried particles.

As a result of subjecting the resulting particles to powder X-ray diffraction measurement, it was confirmed that the obtained particles were ferric phosphate hydrate particles comprising, as an almost whole portion thereof, a compound consistent with a meta-strengite (phosphosiderite) crystal structure and, as only a remaining small portion thereof, a compound consistent with a strengite crystal structure, and had a (122)/(110) peak intensity ratio of 0.06, and further comprised no impurity phase.

It was also confirmed that the obtained particles had a BET specific surface area of 31.5 m²/g, and the Na content therein was not detected because it was not more than 10 ppm. Further, since the molar ratio P/Fe of the particles was 0.98, it was confirmed that the resulting ferric phosphate hydrate particles had a molar ratio P/Fe extremely near to a theoretical composition thereof.

As a result of photographing the obtained particles using a scanning electron microscope, it was confirmed that the resulting particles were in the form of round secondary particles of a tetragonal prism shape formed by densely aggregating thin plate-shaped primary particles. Although it was attempted to measure a primary particle diameter of the obtained particles using a scanning electron microscope, it was difficult to measure a particle diameter thereof in the plate surface direction because the plate surface of the primary particles was grown in the direction towards a center of the aggregated particles. Although the measurement in the thickness direction was possible, it was confirmed that extremely thin plate-shaped particles having a particle diameter of not more than 50 nm were grown.

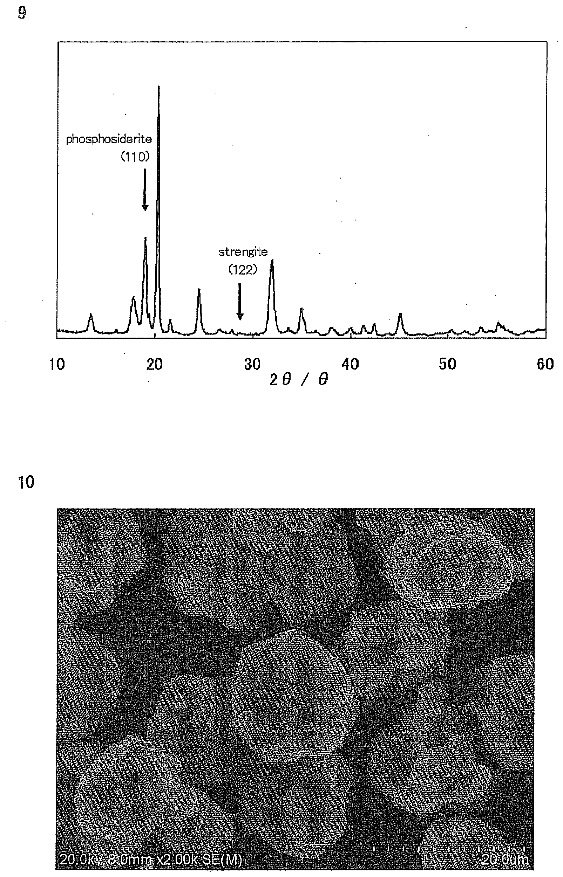

As a result of measuring a particle diameter of the particles by a laser diffraction method, it was also confirmed that the particles had an average secondary particle diameter of 15.7 µm and a tap density of 0.93 g/cc. The scanning electron micrograph of the resulting particles is shown in FIG. 8, and the powder X-ray diffraction pattern thereof is shown in FIG. 9.

### <Example 2-5>

In a mortar, 35 g of the ferric phosphate hydrate particles obtained in Example 1-5, 8.15 g of lithium hydroxide monohydrate and 4.32 g of sucrose were mixed to each other, and then the resulting mixture was calcined at 725°C for 5 hr in a nitrogen atmosphere and passed through a 75 µm-mesh sieve, thereby obtaining olivine type lithium iron phosphate particles.

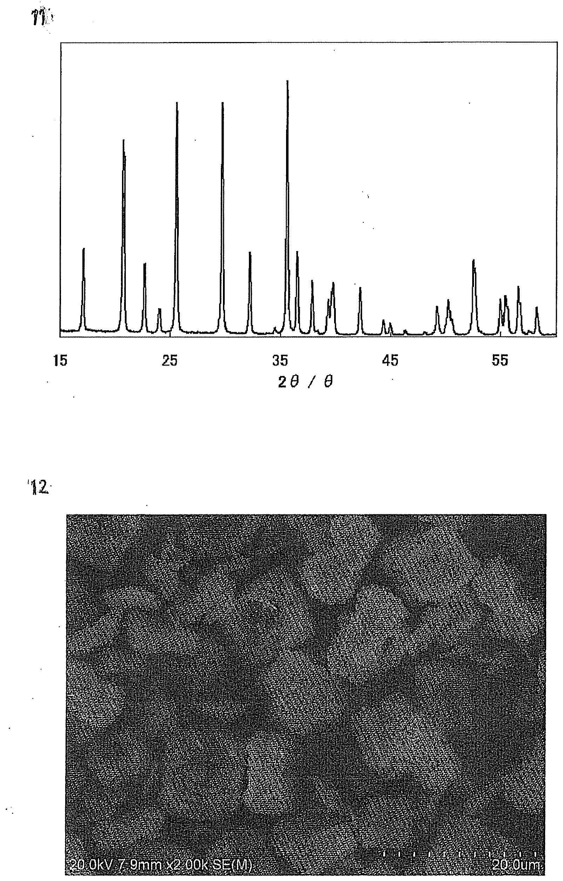

It was confirmed that the resulting calcined product had a BET specific surface area of 39.6 m²/g, a tap density of 1.14 g/cc, a carbon content of 3.24% by weight and an Na content of 60 ppm. As a result of Rietveld analysis, it was confirmed that the resulting particles had a crystallite size of 170 nm, and the secondary particles maintained almost the same particle shape as the shape of aggregated particles of the ferric phosphate hydrate particles as a precursor thereof. The scanning electron micrograph of the resulting particles is shown in FIG. 10, and the powder X-ray diffraction pattern thereof is shown in FIG. 11.

### EXAMPLE 6

### <Example 1-6>

A heating type mixing stirrer was charged with 1412 g of a 6% slurry of iron oxide hydroxide particles having a BET specific surface area of 90.5 m²/g, and an orthophosphoric acid solution was added thereto while stirring such that the molar ratio P/Fe was 2.0. The liquid amount of the resulting mixed slurry was adjusted to a volume of 1.5 L by adding ion-exchanged water thereto such that the reaction concentration based on an iron concentration thereof was 0.6 mol/L. Thereafter, the resulting slurry was heated to 85°C while rotating an agitation blade of the stirrer at a peripheral speed of 1.5 m/s and a rotating speed of 300 rpm and therefore while subjecting the slurry to low-speed stirring, and the contents of the mixing stirrer were reacted for 4 hr under the condition that the temperature therein was held at 85°C. After completion of the reaction, the slurry was withdrawn from the mixing stirrer, washed with water in an amount of three times the volume of the slurry using a filter press, and then subjected to drying treatment at 110°C for 12 hr using a forced air dryer, thereby obtaining 168 g of dried particles.

As a result of subjecting the resulting particles to powder X-ray diffraction measurement, it was confirmed that the obtained particles were ferric phosphate hydrate particles comprising a compound consistent with a meta-strengite (phosphosiderite) crystal structure as a main first phase and a compound consistent with a strengite crystal structure as a second phase, and had a (122)/(110) peak intensity ratio of 0.25, and further comprised no impurity phase.

It was also confirmed that the obtained particles had a BET specific surface area of 23,7 m²/g, and the Na content therein was not detected because it was not more than 10 ppm. Further, since the molar ratio P/Fe of the particles was 0.96, it was confirmed that the resulting ferric phosphate hydrate particles had a molar ratio P/Fe extremely near to a theoretical composition thereof.

As a result of photographing the obtained particles using a scanning electron microscope, it was confirmed that the resulting particles were in the form of round secondary particles of a tetragonal prism shape formed by densely aggregating thin plate-shaped primary particles. Although it was attempted to measure a primary particle diameter of the obtained particles using a scanning electron microscope, it was difficult to measure a particle diameter thereof because the plate surface of the primary particles was grown in the direction towards a center of the aggregated particles. Although the measurement in the thickness direction was possible, it was confirmed that extremely thin plate-shaped particles having a particle diameter of not more than 50 nm were grown.

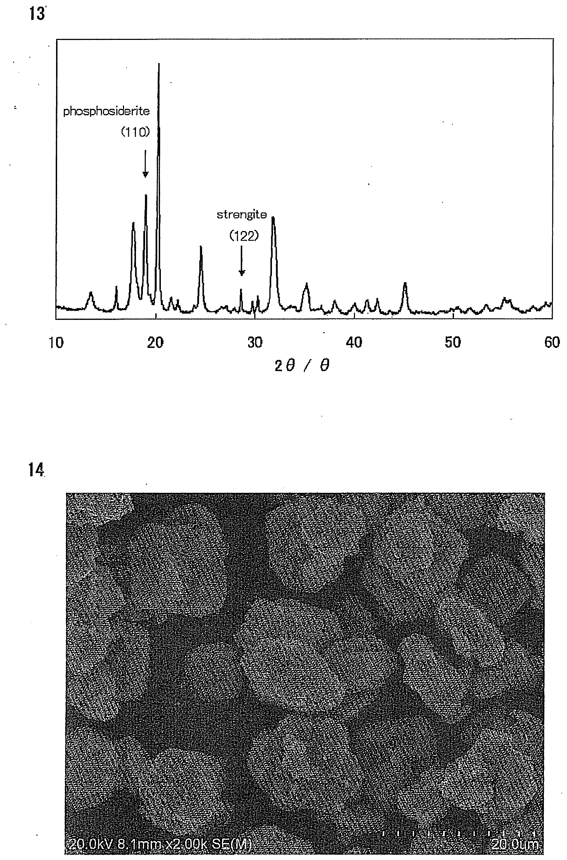

As a result of measuring a particle diameter of the particles by a laser diffraction method, it was also confirmed that the particles had an average secondary particle diameter of 9.8 µm and a tap density of 0.80 g/cc. The scanning electron micrograph of the resulting particles is shown in FIG. 12, and the powder X-ray diffraction pattern thereof is shown in FIG. 13.

### <Example 2-6>

In a mortar, 35 g of the ferric phosphate hydrate particles obtained in Example 1-6, 8.15 g of lithium hydroxide monohydrate and 4.32 g of sucrose were mixed to each other, and then the resulting mixture was calcined at 725°C for 5 hr in a nitrogen atmosphere and passed through a 75 µm-mesh sieve, thereby obtaining olivine type lithium iron phosphate particles.

It was confirmed that the resulting calcined product had a BET specific surface area of 31.2 m²/g, a tap density of 1.04 g/cc, a carbon content of 3.02% by weight and an Na content of 60 ppm. As a result of Rietveld analysis, it was confirmed that the resulting particles had a crystallite size of 300 nm, and the secondary particles maintained almost the same particle shape as the shape of aggregated particles of the ferric phosphate hydrate particles as a precursor thereof. The scanning electron micrograph of the resulting particles is shown in FIG. 14.

### EXAMPLE 7

### <Example 1-7>

A heating type mixing stirrer was charged with 1059 g of a 4% slurry of iron oxide hydroxide particles having a BET specific surface area of 90.5 m²/g, and an orthophosphoric acid solution was added thereto while stirring such that the molar ratio P/Fe was 3.0. The liquid amount of the resulting mixed slurry was adjusted to a volume of 1.5 L by adding ion-exchanged water thereto such that the reaction concentration based on an iron concentration thereof was 0.3 mol/L. Thereafter, the resulting slurry was heated to 85°C while rotating an agitation blade of the stirrer at a peripheral speed of 1.5 m/s and a rotating speed of 300 rpm and therefore while subjecting the slurry to low-speed stirring, and the contents of the mixing stirrer were reacted for 4 hr under the condition that the temperature therein was held at 85°C. After completion of the reaction, the slurry was withdrawn from the mixing stirrer, washed with water in an amount of three times the volume of the slurry using a Nutsche, and then subjected to drying treatment at 110°C for 12 hr using a forced air dryer, thereby obtaining 84 g of dried particles.

As a result of subjecting the resulting particles to powder X-ray diffraction measurement, it was confirmed that the obtained particles were ferric phosphate hydrate particles comprising a compound consistent with a meta-strengite (phosphosiderite) crystal structure as a main first phase and a compound consistent with a strengite crystal structure as a second phase, and had a (122)/(110) peak intensity ratio of 0.23, and further comprised no impurity phase.

It was also confirmed that the obtained particles had a BET specific surface area of 21.1 m²/g, and the Na content therein was not detected because it was not more than 10 ppm. Further, since the molar ratio P/Fe of the particles was 0.97, it was confirmed that the resulting ferric phosphate hydrate particles had a molar ratio P/Fe extremely near to a theoretical composition thereof.

As a result of photographing the obtained particles using a scanning electron microscope, it was confirmed that the resulting particles were in the form of round secondary particles of a tetragonal prism shape formed by densely aggregating thin plate-shaped primary particles. Although it was attempted to measure a primary particle diameter of the obtained particles using a scanning electron microscope, it was difficult to measure a particle diameter thereof because the plate surface of the primary particles was grown in the direction towards a center of the aggregated particles. Although the measurement in the thickness direction was possible, it was confirmed that extremely thin plate-shaped particles having a particle diameter of not more than 50 nm were grown.

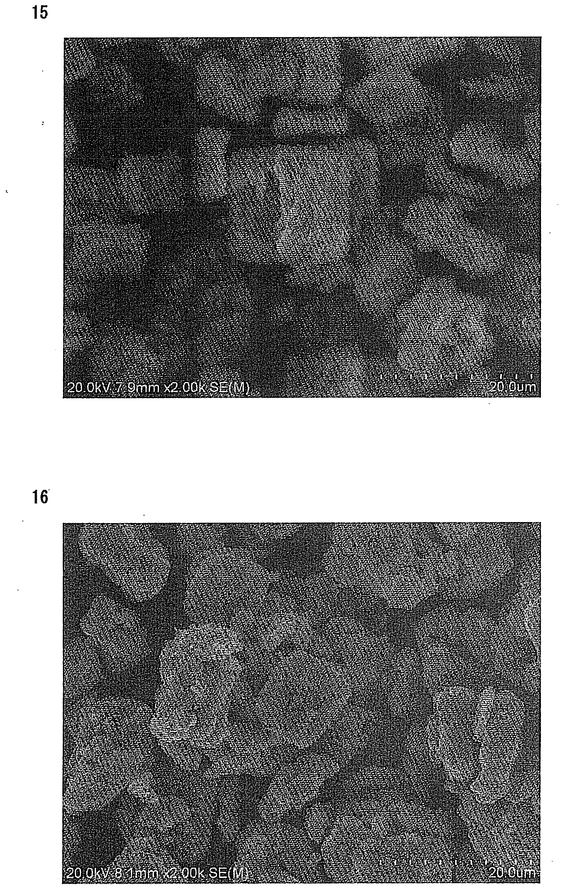

As a result of measuring a particle diameter of the particles by a laser diffraction method, it was also confirmed that the particles had an average secondary particle diameter of 13.3 µm and a tap density of 0.95 g/cc. The scanning electron micrograph of the resulting particles is shown in FIG. 15.

### <Example 2-7>

In a mortar, 35 g of the ferric phosphate hydrate particles obtained in Example 1-7, 8.15 g of lithium hydroxide monohydrate and 4.32 g of sucrose were mixed to each other, and then the resulting mixture was calcined at 725°C for 5 hr in a nitrogen atmosphere and passed through a 75 µm-mesh sieve, thereby obtaining olivine type lithium iron phosphate particles.

It was confirmed that the resulting calcined product had a BET specific surface area of 34.5 m²/g, a tap density of 1.16 g/cc, a carbon content of 3.21% by weight and an Na content of 65 ppm. As a result of Rietveld analysis, it was confirmed that the resulting particles had a crystallite size of 200 nm, and the secondary particles maintained almost the same particle shape as the shape of aggregated particles of the ferric phosphate hydrate particles as a precursor thereof. The scanning electron micrograph of the resulting particles is shown in FIG. 16.

### EXAMPLE 8

### <Example 1-8>

A heating type mixing stirrer was charged with 7842 g of a 6% slurry of iron oxide hydroxide particles having a BET specific surface area of 90.5 m²/g, and an orthophosphoric acid solution was added thereto while stirring such that the molar ratio P/Fe was 3.0. The liquid amount of the resulting mixed slurry was adjusted to a volume of 10 L by adding ion-exchanged water thereto such that the reaction concentration based on an iron concentration thereof was 0.5 mol/L. Thereafter, the resulting slurry was heated to 85°C while rotating an agitation blade of the stirrer at a peripheral speed of 1.2 m/s and a rotating speed of 200 rpm and therefore while subjecting the slurry to low-speed stirring, and the contents of the mixing stirrer were reacted for 4 hr under the condition that the temperature therein was held at 85°C. After completion of the reaction, the slurry was withdrawn from the mixing stirrer, washed with water in an amount of three times the volume of the slurry using a filter press, and then subjected to drying treatment at 110°C for 12 hr using a forced air dryer, thereby obtaining 934 g of dried particles.

As a result of subjecting the resulting particles to powder X-ray diffraction measurement, it was confirmed that the obtained particles were ferric phosphate hydrate particles comprising, as an almost whole amount thereof, a compound consistent with a meta-strengite (phosphosiderite) crystal structure and, as only a remaining small portion thereof, a compound consistent with a strengite crystal structure, and had a (122)/(110) peak intensity ratio of 0.07, and further comprised no impurity phase.

It was also confirmed that the obtained particles had a BET specific surface area of 28.1 m²/g, and the Na content therein was not detected because it was not more than 10 ppm. Further, since the molar ratio P/Fe of the particles was 1.01, it was confirmed that the resulting ferric phosphate hydrate particles had a molar ratio P/Fe extremely near to a theoretical composition thereof.

As a result of photographing the obtained particles using a scanning electron microscope, it was confirmed that the resulting particles were in the form of round secondary particles of a tetragonal prism shape formed by densely aggregating thin plate-shaped primary particles. Although it was attempted to measure a primary particle diameter of the obtained particles using a scanning electron microscope, it was difficult to measure a particle diameter thereof because the plate surface of the primary particles was grown in the direction towards a center of the aggregated particles. Although the measurement in the thickness direction was possible, it was confirmed that extremely thin plate-shaped particles having a particle diameter of not more than 50 nm were grown.

As a result of measuring a particle diameter of the particles by a laser diffraction method, it was also confirmed that the particles had an average secondary particle diameter of 10.6 µm and a tap density of 0.83 g/cc.

### <Example 2-8>

In a mortar, 35 g of the ferric phosphate hydrate particles obtained in Example 1-8, 8.15 g of lithium hydroxide monohydrate and 4.32 g of sucrose were mixed to each other, and then the resulting mixture was calcined at 725°C for 5 hr in a nitrogen atmosphere and passed through a 75 µm-mesh sieve, thereby obtaining olivine type lithium iron phosphate particles.

It was confirmed that the resulting calcined product had a BET specific surface area of 36.7 m²/g, a tap density of 1.06 g/cc, a carbon content of 3.26% by weight and an Na content of 60 ppm. As a result of Rietveld analysis, it was confirmed that the resulting particles had a crystallite size of 200 nm, and the secondary particles maintained almost the same particle shape as the shape of aggregated particles of the ferric phosphate hydrate particles as a precursor thereof.

The production conditions of the ferric phosphate hydrate particles obtained in Examples 1-5 to 1-8 are shown in Table 3, and various properties of the thus obtained ferric phosphate hydrate particles are shown in Table 4.

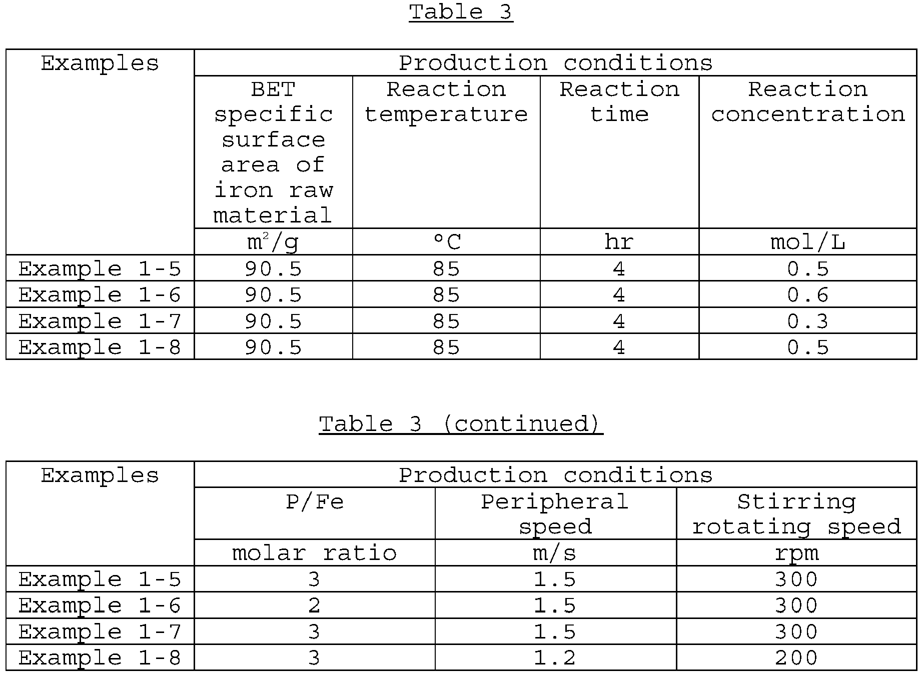

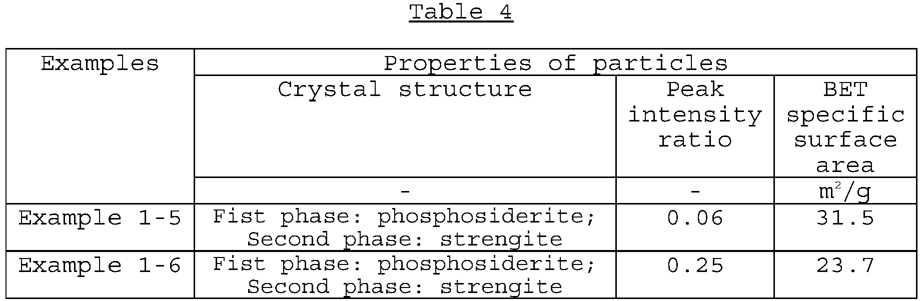

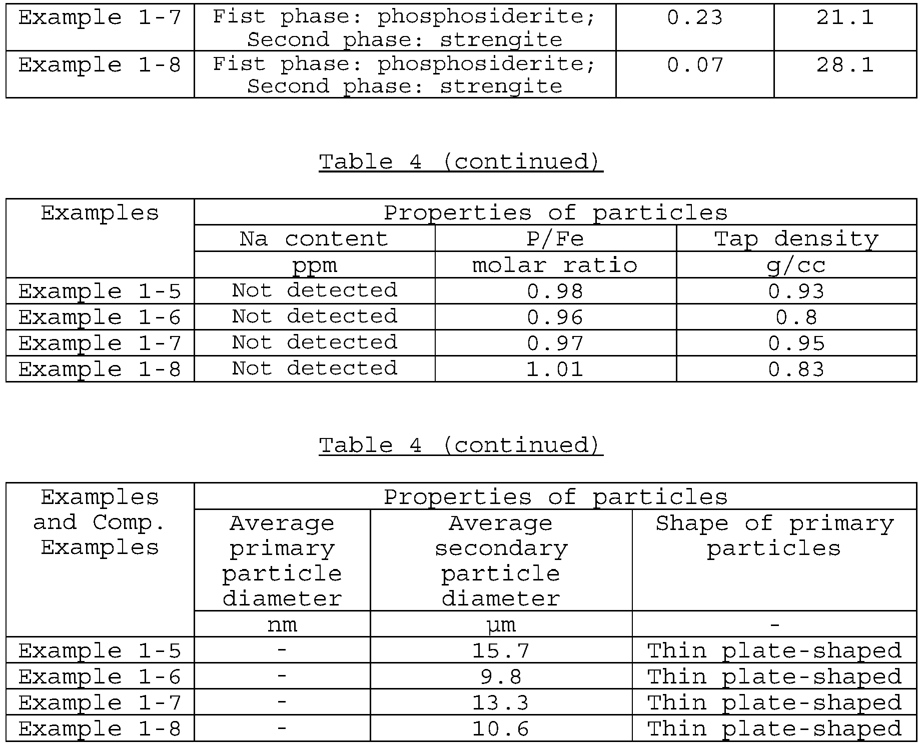

Next, various properties of the olivine type lithium iron phosphate particles obtained in Examples 2-1 to 2-8 and Comparative Examples 2-1 and 2-3 as well as evaluation results of initial charge/discharge characteristics of coin cells are shown in Table 5.

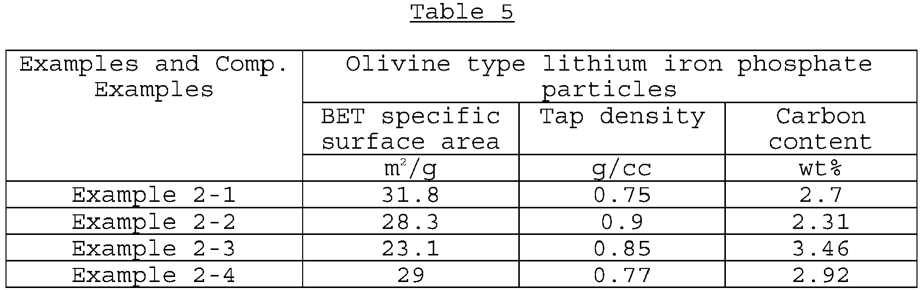

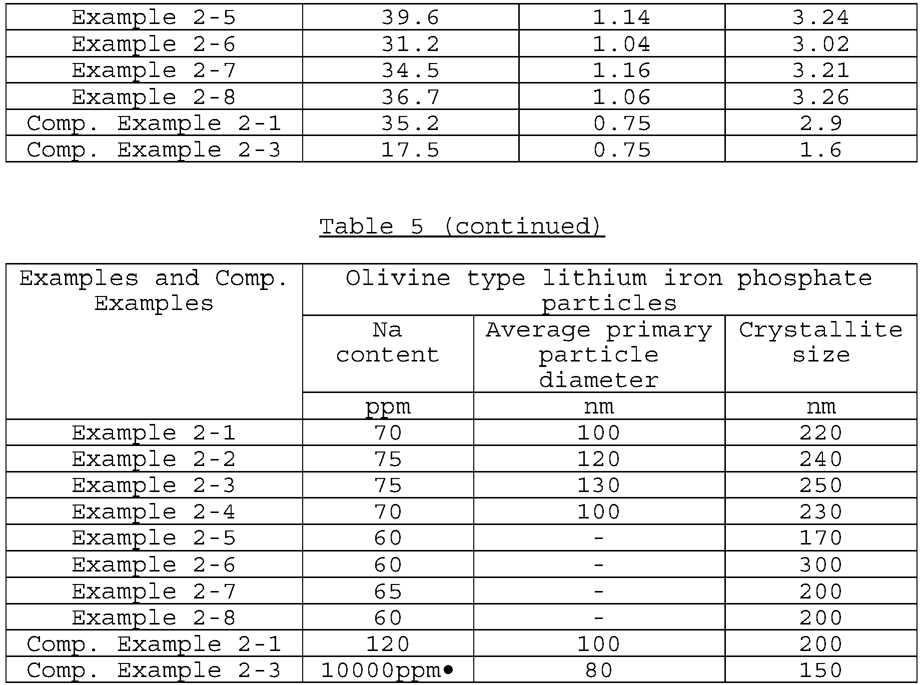

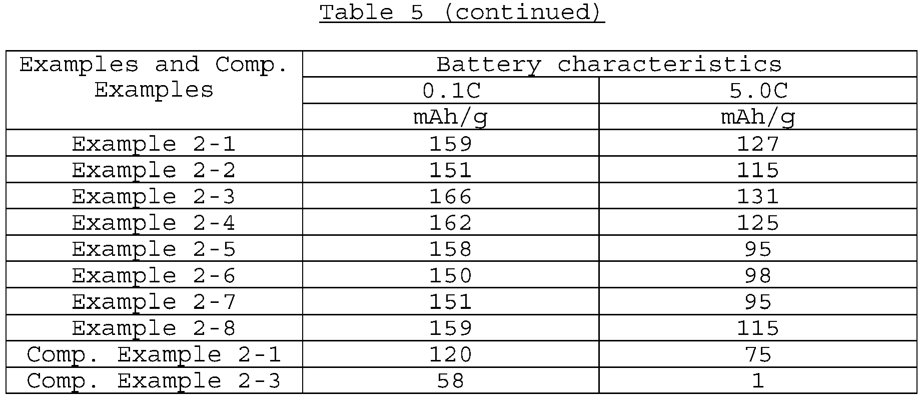

From the above results, it was confirmed that the olivine type lithium iron phosphate particles produced according to the process of the present invention had a large charge/discharge capacity, an excellent rate characteristic upon charging and discharging, and were useful as an active substance for non-aqueous electrolyte secondary batteries.

### INDUSTRIAL APPLICABILITY

The ferric phosphate hydrate particles produced in the process according to the present invention can be produced from an inexpensive raw material in a simple and convenient manner, and the resulting particles are in the form of fine particles and have a very small content of impurities and therefore can be suitably used as a precursor of olivine type lithium iron phosphate particles for non-aqueous electrolyte secondary batteries. In addition, the ferric phosphate hydrate particles produced in the process according to the present invention are in the form of secondary particles formed by aggregating fine primary particles and therefore can be suitably used as a precursor of olivine type lithium iron phosphate particles for non-aqueous electrolyte secondary batteries. Further, by using the ferric phosphate hydrate particles obtained in the process according to the present invention as a raw material, it is possible to produce a positive electrode active substance for non-aqueous electrolyte secondary batteries capable of exhibiting excellent battery characteristics.

## Claims

1. A process comprising the steps of:
reacting iron oxide particles or iron oxide hydroxide particles with a phosphorus compound in a solution thereof, which comprises using as iron raw materials the iron oxide particles or the iron oxide hydroxide particles having a BET specific surface area of not less than 50 m²/g, and conducting the reaction in a temperature range of 60 to 100°C, wherein a reaction concentration in the solution is in the range of 0.1 to 3.0 mol/L based on a concentration of iron therein, an amount of the phosphorus compound added as a raw material charged is 100 to 1000% in terms of mol% of phosphorus ions based on iron ions, and a pH value of the reaction solution is not more than 3, to produce ferric phosphate hydrate particles which have a sodium (Na) content of not more than 100 ppm, and a molar ratio of phosphorus to iron (phosphorus/iron) of 0.9 to 1.1;
mixing the ferric phosphate hydrate particles with a lithium compound and an organic compound; and
subjecting the resulting mixture to a heat treatment in an inert atmosphere or a reducing atmosphere at a temperature of 300 to 800°C,
to produce olivine type lithium iron phosphate particles.

2. A process according to claim 1, wherein the olivine type lithium iron phosphate particles have a sodium (Na) content of not more than 10 ppm.

3. A process according to either claim 1 or claim 2, wherein the olivine type lithium iron phosphate particles have a tap density of 0.7 to 1.5 g/cc.

4. A process according to any one of claims 1 to 3, which further comprises taking the olivine type lithium iron phosphate particles and adding to them a conducting agent and a binder to produce a positive electrode.

5. A process according to claim 4, wherein the conducting agent is selected from acetylene black, carbon black and graphite.

6. A process according to either claim 4 or claim 5, wherein the binder is selected from polytetrafluoroethylene and polyvinylidene fluoride.

7. A process according to any one of claims 4 to 6, which further comprises taking the positive electrode together with a negative electrode and an electrolyte and producing a secondary battery.

8. A process according to claim 7, wherein the negative electrode is selected from metallic lithium, lithium/aluminum alloy, lithium/tin alloy and graphite or black lead.

9. A process according to either claim 7 or claim 8, wherein the electrolyte solution includes a solvent which is a combination of ethylene carbonate and diethyl carbonate or is an organic solvent comprising at least one compound selected from the group consisting of propylene carbonate, dimethyl carbonate and dimethoxy ethane.

10. A process according to any one of claims 7 to 9, wherein the electrolyte contains dissolved in it lithium phosphate hexafluoride, lithium perchlorate or lithium borate tetrafluoride.

## Patentansprüche

1. Verfahren, das folgende Schritte umfasst:
Umsetzen von Eisenoxidteilchen oder Eisenoxidhydroxidteilchen mit einer Phosphorverbindung in einer Lösung davon, das die Verwendung der Eisenoxidteilchen oder der Eisenoxidhydroxidteilchen, die eine spezifische BET-Oberfläche von nicht weniger als 50 m²/g aufweisen, als Eisenrohstoffe, und die Durchführung der Reaktion in einem Temperaturbereich von 60 bis 100 °C umfasst, wobei eine Reaktionskonzentration in der Lösung im Bereich von 0,1 bis 3,0 mol/l basierend auf einer Konzentration von Eisen darin liegt, eine Menge der Phosphorverbindung, die als Ausgangsmaterial zugegeben wird, 100 bis 1000%, ausgedrückt in Mol-% Phosphorionen basierend auf Eisenionen, beträgt, und ein pH-Wert der Reaktionslösung nicht mehr als 3 beträgt, um Eisen(III)-phosphathydratteilchen zu erzeugen, die einen Gehalt an Natrium (Na) von nicht mehr als 100 ppm aufweisen, und ein molares Verhältnis von Phosphor zu Eisen (Phosphor/Eisen) von 0,9 bis 1,1;
Mischen der Eisen(III)-phosphathydratteilchen mit einer Lithiumverbindung und einer organischen Verbindung; und
Unterziehen des resultierenden Gemisches einer Wärmebehandlung in einer inerten Atmosphäre oder einer reduzierenden Atmosphäre bei einer Temperatur von 300 bis 800 °C, um Lithiumeisenphosphatpartikel vom Olivintyp herzustellen.

2. Verfahren nach Anspruch 1, wobei die Lithiumeisenphosphatteilchen vom Olivin-Typ einen Gehalt an Natrium (Na) von nicht mehr als 10 ppm aufweisen.

3. Verfahren nach Anspruch 1 oder 2, wobei die Lithiumeisenphosphatteilchen vom Olivin-Typ eine Klopfdichte von 0,7 bis 1,5 g/cc aufweisen.

4. Verfahren nach einem der Ansprüche 1 bis 3, das ferner umfasst, dass die Lithiumeisenphosphatteilchen vom Olivin-Typ genommen wrden und ihnen ein leitendes Mittel und ein Bindemittel zugesetzt wird, um eine positive Elektrode herzustellen.

5. Verfahren nach Anspruch 4, wobei das leitende Mittel ausgewählt ist aus Acetylenruß, Ruß und Graphit.

6. Verfahren nach Anspruch 4 oder 5, wobei das Bindemittel aus Polytetrafluorethylen und Polyvinylidenfluorid ausgewählt ist.

7. Verfahren nach einem der Ansprüche 4 bis 6, das ferner umfasst, dass die positive Elektrode zusammen mit einer negativen Elektrode und einem Elektrolyten genommen wird und eine Sekundärbatterie hergestellt wird.

8. Verfahren nach Anspruch 7, wobei die negative Elektrode ausgewählt ist aus metallischem Lithium, Lithium/Aluminium-Legierung, Lithium/Zinn-Legierung und Graphit oder Schwarzblei.

9. Verfahren nach Anspruch 7 oder 8, wobei die Elektrolytlösung ein Lösungsmittel enthält, das eine Kombination aus Ethylencarbonat und Diethylcarbonat ist oder ein organisches Lösungsmittel ist, das mindestens eine Verbindung umfasst, die aus der Gruppe ausgewählt ist, die aus Propylencarbonat, Dimethylcarbonat und Dimethoxyethan besteht.

10. Verfahren nach einem der Ansprüche 7 bis 9, wobei der Elektrolyt Lithiumphosphathexafluorid, Lithiumperchlorat oder Lithiumborat-Tetrafluorid in Lösung enthält.

## Revendications

1. Procédé comprenant les étapes consistant à :
faire réagir des particules d'oxyde de fer ou des particules d'oxyde de fer et d'hydroxyde avec un composé phosphoré dans une solution de celui-ci, qui comprend l'utilisation comme matières premières de fer des particules d'oxyde de fer ou des particules d'oxyde de fer et d'hydroxyde ayant une surface spécifique BET d'au moins 50 m²/g, et la réalisation de la réaction dans une plage de températures de 60 à 100°C, dans lequel une concentration de réaction dans la solution est dans la plage de 0,1 à 3,0 mol/L sur la base d'une concentration de fer dans celle-ci, une quantité du composé phosphoré ajouté en tant que matière première chargée est de 100 à 1000 % en termes de % molaire d'ions phosphore par rapport aux ions fer, et une valeur de pH de la solution de réaction n'est pas supérieure à 3, pour produire des particules de phosphate ferrique hydraté qui ont une teneur en sodium (Na) ne dépassant pas 100 ppm et un rapport molaire du phosphore par rapport au fer (phosphore/fer) de 0,9 à 1,1 ;
mélanger les particules de phosphate ferrique hydraté avec un composé de lithium et un composé organique ; et
soumettre le mélange résultant à un traitement thermique dans une atmosphère inerte ou une atmosphère réductrice à une température de 300 à 800°C, pour produire des particules de phosphate de fer de lithium de type olivine.

2. Procédé selon la revendication 1, dans lequel les particules de phosphate de fer de lithium de type olivine ont une teneur en sodium (Na) d'au plus 10 ppm.

3. Procédé selon l'une des revendications 1 ou 2, dans lequel les particules de phosphate de fer de lithium de type olivine ont une densité tassée de 0,7 à 1,5 g/cc.

4. Procédé selon l'une quelconque des revendications 1 à 3, qui comprend en outre la prise des particules de phosphate de fer de lithium de type olivine et l'ajout de celles-ci d'un agent conducteur et d'un liant pour produire une électrode positive.

5. Procédé selon la revendication 4, dans lequel l'agent conducteur est choisi parmi le noir d'acétylène, le noir de carbone et le graphite.

6. Procédé selon l'une des revendications 4 ou 5, dans lequel le liant est choisi parmi le polytétrafluoréthylène et le polyfluorure de vinylidène.

7. Procédé selon l'une quelconque des revendications 4 à 6, qui comprend en outre la prise de l'électrode positive avec une électrode négative et un électrolyte et la production d'une batterie secondaire.

8. Procédé selon la revendication 7, dans lequel l'électrode négative est choisie parmi le lithium métallique, l'alliage lithium/aluminium, l'alliage lithium/étain et le graphite ou le plomb noir.

9. Procédé selon l'une des revendications 7 ou 8, dans lequel la solution d'électrolyte comprend un solvant qui est une combinaison de carbonate d'éthylène et de carbonate de diéthyle ou est un solvant organique comprenant au moins un composé choisi dans le groupe constitué par le carbonate de propylène, le carbonate de diméthyle, et d'éthane de diméthoxy.

10. Procédé selon l'une quelconque des revendications 7 à 9, dans lequel l'électrolyte contient en solution de l'hexafluorure de phosphate de lithium, du perchlorate de lithium ou du tétrafluorure de borate de lithium.
